# EUROPEAN PATENT APPLICATION

(11) **EP 4 723 732 A1**
(43) Date of publication of application: **08.04.2026**
(21) Application number: 24822651.6
(22) Date of filing: 07.06.2024
(51) Int. Cl.: H04W 36/00

(54) **SWITCHING METHOD AND COMMUNICATION APPARATUS**

(30) Priority: 15.06.2023 CN 202310714406
(71) Applicant: Huawei Technologies Co., Ltd., Shenzhen, Guangdong 518129 (CN)
(72) Inventor: GE, Cuili, Shenzhen, Guangdong 518129 (CN); YANG, Yanmei, Shenzhen, Guangdong 518129 (CN); XU, Shengfeng, Shenzhen, Guangdong 518129 (CN); ZHU, Fangyuan, Shenzhen, Guangdong 518129 (CN)
(74) Representative: Maiwald GmbH
(86) International application number: PCT/CN2024/098029
(87) International publication number: WO 2024/255700

(57) **Abstract**

Embodiments of this application provide a switching method and a communication apparatus. According to the method in this application, an access network device may determine, based on first information received from a first device, to switch from a first interface to a second interface to transmit an uplink data packet from a terminal device, so as to avoid service interruption of the terminal device caused because the access network device blindly switches from the first interface to the second interface to transmit the uplink data packet from the terminal device when the access network device cannot identify a data packet transmitted between the terminal device and a source network computing converged function node, thereby helping ensure service experience of a user. The first interface is an interface between the access network device and the source network computing converged function node, the second interface is an interface between the access network device and a target network computing converged function node, and the first device is the terminal device or the source network computing converged function node.

## Description

This application claims priority to Chinese Patent Application No. 202310714406.5, filed with the China National Intellectual Property Administration on June 15, 2023 and entitled "SWITCHING METHOD AND COMMUNICATION APPARATUS", which is incorporated herein by reference in its entirety.

### TECHNICAL FIELD

Embodiments of this application relate to the communication field, and more specifically, to a switching method and a communication apparatus.

### BACKGROUND

A next-generation mobile communication network integrates features and functions of cloud computing and computing power networks, and need to integrate cloud, computing power, and mobile communication. A network architecture of cloud-computing-network mobile communication includes a network computing converged function (network computing converged function) node, which is responsible for providing a computing power service for user equipment (user equipment, UE).

When an NCCF node has provided a computing power service for the UE, a problem of how to switch another NCCF node for the UE when a processing capability of the NCCF node deteriorates needs to be considered.

### SUMMARY

Embodiments of this application provide a switching method, so as to switch another network computing converged function (network computing converged function) node for a terminal device without affecting service continuity of the terminal device, thereby improving user experience.

According to a first aspect, a switching method is provided. The method may be performed by an access network device, or may be performed by a component (for example, a chip or a circuit) of the access network device. This is not limited. The following uses an example in which the method is performed by the access network device is used for description.

The method includes: The access network device receives first information from a first device. The access network device determines, based on the first information, to switch from a first interface to a second interface to transmit an uplink data packet from a terminal device, where the first interface is an interface between the access network device and a source network computing converged function node, the second interface is an interface between the access network device and a target network computing converged function node, and the first device is the terminal device or the source network computing converged function node. The access network device forwards the uplink data packet from the terminal device to the target network computing converged function node through the second interface.

Based on the foregoing technical solution, the access network device may determine, based on the first information from the first device, to switch from the first interface to the second interface to transmit the uplink data packet from the terminal device, so as to avoid service interruption of the terminal device caused because the access network device blindly switches from the first interface to the second interface to transmit the uplink data packet from the terminal device when the access network device cannot identify a data packet transmitted between the terminal device and the source network computing converged function node, thereby helping ensure service experience of the terminal device.

It may be understood that, before the access network device determines to switch from the first interface to the second interface to transmit the uplink data packet from the terminal device, the access network device forwards the uplink data packet from the terminal device to the source network computing converged function node through the first interface.

For example, switching from the first interface to the second interface is specifically: updating a first mapping relationship to a second mapping relationship, where the first mapping relationship is a mapping relationship between a first data radio bearer (data radio bearer, DRB) between the terminal device and the access network device and the first interface, and the second mapping relationship is a mapping relationship between the first DRB and the second interface.

In a possible implementation, when the access network device updates the first mapping relationship to the second mapping relationship, the access network device may further store (or maintain) a third mapping relationship. The third mapping relationship is a mapping relationship between a second DRB between the terminal device and the access network device and the first interface. The second DRB is different from the first DRB. In other words, a data flow carried on the first DRB is different from a data flow carried on the first DBR.

It may be understood that, when the access network device further stores the third mapping relationship, after determining to switch from the first interface to the second interface to transmit the uplink data packet from the terminal device, the access network device forwards, to the target network computing converged function node through the second interface, the uplink data packet received from the terminal device through the first DRB, and forwards, to the source network computing converged function node through the first interface, the uplink data packet received from the terminal device through the second DRB.

It may be further understood that, before the access network device determines to switch from the first interface to the second interface to transmit the uplink data packet from the terminal device, the access network device stores (or maintains) a fourth mapping relationship. The fourth mapping relationship is a mapping relationship between the first DRB and the second DRB and the first interface. When the access network device stores the fourth mapping relationship, the access network device forwards, to the source network computing converged function node through the first interface, the uplink data packet received from the terminal device through the first DRB and the second DRB.

In a possible implementation, the first information is first switching acknowledgment information, and before the access network device receives the first information from the first device, the method further includes: The access network device sends first switching request information to the first device.

Optionally, the first switching request information includes identification information of a first data flow and/or information about the target network computing converged function node, and the first data flow is a data flow whose transmission is to be switched from the first interface to the second interface.

A data flow #x is used as an example. Before determining to switch from the first interface to the second interface to transmit the uplink data packet from the terminal device, the access network device forwards the uplink data packet from the terminal device in the data flow #x to the source network computing converged function node, and after determining to switch from the first interface to the second interface to transmit the uplink data packet from the terminal device, the access network device forwards the uplink data packet from the terminal device in the data flow #x to the target network computing converged function node. In this case, the data flow #x is a data flow whose transmission is to be switched from the first interface to the second interface.

Based on the foregoing technical solution, if the first switching request information includes the identification information of the first data flow, the first device may determine, based on the identification information of the first data flow, the first data flow whose transmission is to be switched from the first interface to the second interface. If the first switching request information includes the information about the target network computing converged function node, the first device may send, to the target network computing converged function node based on the information about the target network computing converged function node, a context of a data flow whose transmission is to be switched from the first interface to the second interface, or the first device sends the information about the target network computing converged function node to the source network computing converged function node, so that the source network computing converged function node sends, to the target network computing converged function based on the information about the target network computing converged function node, the context of the data flow whose transmission is to be switched from the first interface to the second interface, thereby helping ensure service continuity of the terminal device.

Optionally, the first switching acknowledgment information includes identification information of a second data flow, and the second data flow includes the first data flow and a data flow associated with the first data flow, or the second data flow includes a data flow associated with the first data flow, or the second data flow is a part or an entirety of the first data flow; and the second data flow is a data flow whose transmission is to be switched from the first interface to the second interface.

Optionally, the first switching acknowledgment information further includes information about a timer, and that the access network device determines, based on the first information, to switch from the first interface to the second interface to transmit the uplink data packet from the terminal device includes: The access network device determines, based on the information about the timer, to switch from the first interface to the second interface to transmit the uplink data packet from the terminal device after the timer expires.

It may be understood that, if the access network device determines to switch from the first interface to the second interface to transmit the uplink data packet from the terminal device after the timer expires, the access network device sends, to the target network computing converged function node through the second interface, the uplink data packet received from the terminal device after the timer expires.

Optionally, if the first device is the terminal device, the first switching acknowledgment information includes a target packet sequence number; that the access network device determines, based on the first information, to switch from the first interface to the second interface to transmit the uplink data packet from the terminal device includes: The access network device determines, based on the target packet sequence number, to switch from the first interface to the second interface to transmit the uplink data packet from the terminal device after a target data packet is received, where the target data packet includes the target packet sequence number; and that the access network device forwards the uplink data packet from the terminal device to the target network computing converged function node through the second interface includes: The access network device forwards the target data packet from the terminal device and at least one data packet after the target data packet to the target network computing converged function node through the second interface.

In a possible implementation, the first information is a switching indication packet, and that the access network device forwards the uplink data packet from the terminal device to the target network computing converged function node through the second interface includes: The access network device forwards a data packet after the switching indication packet from the terminal device to the target network computing converged function node through the second interface.

For example, the switching indication packet is an end marker (end marker) packet.

It should be understood that the data packet after the switching indication packet is a data packet received by the access network device from the terminal device after the switching indication packet.

In a possible implementation, the first device is the terminal device, the first information is packet indication information, the packet indication information indicates that a first data packet is an initial packet or a tail packet of a first task, and the first data packet includes the packet indication information; and that the access network device receives the first information from the first device includes: The access network device receives the first data packet from the first device; and that the access network device determines, based on the first information, to switch from the first interface to the second interface to transmit the uplink data packet from the terminal device includes: If the packet indication information indicates that the first data packet is the initial packet of the first task, the access network device determines to switch from the first interface to the second interface to transmit the uplink data packet from the terminal device; or if the packet indication information indicates that the first data packet is the tail packet of the first task, after receiving a second data packet from the terminal device, the access network device determines to switch from the first interface to the second interface to transmit the uplink data packet from the terminal device, where the second data packet is a data packet received by the access network device after the first data packet;

It should be understood that, if the packet indication information indicates that the first data packet is the initial packet of the first task, the access network device forwards, to the target network computing converged function node through the second interface, the first data packet and at least one data packet received from the terminal device after the first data packet; or if the packet indication information indicates that the first data packet is the tail packet of the first task, the access network device forwards, to the target network computing converged function node through the second interface, a data packet (that is, a second data packet) received from the terminal device after the first data packet.

It should be noted that the first task (task) is a unit (unit) that implements specific service logic, and may belong to an application (application) or a service (service). For example, the first task may refer to the start to end of one rendering in an extended reality (extended reality, XR) application or a cloud game, the start to end of rendering of one frame of video, the start to end of a rendering of one or more groups of picture (group of picture, GOP), one inference (from the start to end of the inference) in an artificial intelligence (artificial intelligence, AI) application, or one (relatively) independent calculation in one AI inference. The first task may also be referred to as a first transaction (transaction).

Based on the foregoing technical solution, the access network device may identify the data packet from the terminal device based on the packet indication information in the data packet from the terminal device, so that the access network device can determine when to send the data packet from the UE to the target network computing converged function node without interacting with another node. For example, the access network device does not need to initiate a switching request to the target network computing converged function node or the terminal device, and correspondingly, the target network computing converged function node or the terminal device does not need to return a switching response to the access network device.

For example, the packet indication information is included at a service data adaptation protocol (service data adaptation protocol, SDAP) layer or a protocol data unit (protocol data unit, PDU) layer of the first data packet.

In a possible implementation, the first device is the terminal device, the first information is switching indication information, and that the access network device receives the first information from the first device includes: The access network device receives a third data packet from the first device, where the third data packet includes the switching indication information; and that the access network device forwards the uplink data packet from the terminal device to the target network computing converged function node through the second interface includes: The access network device forwards the third data packet to the target network computing converged function node through the second interface.

It should be understood that the access network device may further forward, to the target network computing converged function node through the second interface, a data packet received from the terminal device after the third data packet.

For example, the switching indication information is 1-bit information, or information about the target network computing converged function node, or identification information of a data flow whose transmission is to be switched from the first interface to the second interface.

For example, the switching indication information is included at an SDAP layer or a PDU layer of the third data packet.

In a possible implementation, the first device is the terminal device, and the first information is second switching request information.

Based on the foregoing technical solution, the terminal device may trigger switching of a network computing converged function node by using the second switching request information. Compared with a manner in which a control plane network element triggers switching of a network computing converged function node, the foregoing technical solution can reduce some signaling interactions, so that a user plane path switching delay can be reduced, and end-to-end service experience can be improved.

Optionally, the second switching request information includes identification information of a third data flow, and the third data flow is a data flow whose transmission is to be switched from the first interface to the second interface.

Based on the foregoing technical solution, the access network device may determine the third data flow that the terminal device requests to switch.

With reference to the first aspect, in some implementations of the first aspect, the first device is the terminal device, and the method further includes: The access network device sends a switching command to the source network computing converged function node, where the switching command includes identification information of a fourth data flow and/or the information about the target network computing converged function node, and the fourth data flow is a data flow whose transmission is to be switched from the first interface to the second interface.

Based on the foregoing technical solution, the access network device sends the switching command to the source network computing converged function node, so that the source network computing converged function node sends, to the target network computing converged function node based on the switching command, a context of a data flow whose transmission is to be switched from the first interface to the second interface, thereby helping ensure service continuity of the terminal device.

With reference to the first aspect, in some implementations of the first aspect, the method further includes: The access network device determines the target network computing converged function node.

For example, the access network device determines the target network computing converged function node when a first condition is met, where the first condition includes one or more of the following: a processing capability of the source network computing converged function node is less than a processing capability threshold, and/or quality of communication between the source network computing converged function node and the terminal device is less than a communication quality threshold.

Based on the foregoing technical solution, when the first condition is met, the source network computing converged function node may not be able to provide a service that meets a requirement of the terminal device. Therefore, if the target network computing converged function node determined by the access network device can provide the service that meets the requirement of the terminal device, user experience is improved.

With reference to the first aspect, in some implementations of the first aspect, the method further includes: The access network device receives the information about the target network computing converged function node from a converged management function network element.

According to a second aspect, a switching method is provided. The method may be performed by a first device, or may be performed by a component (for example, a chip or a circuit) of the first device. This is not limited. The following uses an example in which the method is performed by the first device is used for description.

The method includes: The first device receives first switching request information from an access network device, where the first device is a terminal device or a source network computing converged function node; and the first device sends first switching acknowledgment information to the access network device, where the first switching acknowledgment information is used by the access network device to determine to switch from a first interface to a second interface to transmit an uplink data packet from the terminal device, the first interface is an interface between the access network device and the source network computing converged function node, and the second interface is an interface between the access network device and a target network computing converged function node.

For beneficial effects of the second aspect and the implementations of the second aspect, refer to the first aspect.

With reference to the second aspect, in some implementations of the second aspect, the first switching request information includes identification information of a first data flow and/or information about the target network computing converged function node, and the first data flow is a data flow whose transmission is to be switched from the first interface to the second interface.

With reference to the second aspect, in some implementations of the second aspect, the first switching acknowledgment information includes identification information of a second data flow, and the second data flow includes the first data flow and a data flow associated with the first data flow, or the second data flow includes a data flow associated with the first data flow, or the second data flow is a part or an entirety of the first data flow; and the second data flow is a data flow whose transmission is to be switched from the first interface to the second interface.

With reference to the second aspect, in some implementations of the second aspect, the first switching acknowledgment information includes information about a timer, and the first switching acknowledgment information is used by the access network device to determine to switch from the first interface to the second interface to transmit the uplink data packet from the terminal device after the timer expires.

With reference to the second aspect, in some implementations of the second aspect, the first device is the terminal device, the first switching acknowledgment information includes a target packet sequence number, the first switching acknowledgment information is used by the access network device to determine to switch from the first interface to the second interface to transmit the uplink data packet from the terminal device after a target data packet is received, and the target data packet includes the target packet sequence number.

With reference to the second aspect, in some implementations of the second aspect, the first device is the source network computing converged function node, and the method further includes: The first device sends, to the target network computing converged function node, a context of a data flow whose transmission is to be switched from the first interface to the second interface.

According to a third aspect, a switching method is provided. The method may be performed by a terminal device, or may be performed by a component (for example, a chip or a circuit) of the terminal device. This is not limited. The following uses an example in which the method is performed by the terminal device is used for description.

The method includes: The terminal device determines to switch a network computing converged function node; and the terminal device sends a third data packet to an access network device, where the third data packet includes switching indication information, and the switching indication information is used by the access network device to determine to switch from a first interface to a second interface to transmit an uplink data packet from the terminal device; or the terminal device sends second switching request information to an access network device, where the second switching request information is used by the access network device to determine to switch from a first interface to a second interface to transmit an uplink data packet from the terminal device, the first interface is an interface between the access network device and a source network computing converged function node, and the second interface is an interface between the access network device and a target network computing converged function node.

Based on the foregoing technical solution, the terminal device may trigger switching of the network computing converged function node. Compared with a manner in which a control plane network element triggers switching of a network computing converged function node, the foregoing technical solution can reduce some signaling interactions, so that a user plane path switching delay can be reduced, and end-to-end service experience can be improved.

In addition, the access network device may determine, based on the switching indication information or the second switching request information from the terminal device, to switch from the first interface to the second interface to transmit the uplink data packet from the terminal device, so as to avoid service interruption of the terminal device caused because the access network device blindly switches from the first interface to the second interface to transmit the uplink data packet from the terminal device when the access network device cannot identify a data packet transmitted between the terminal device and the source network computing converged function node, thereby helping ensure service experience of a user.

For example, that the terminal device determines to switch the network computing converged function node includes: The terminal device determines to switch the network computing converged function node when a first condition is met, where the first condition includes one or more of the following: a processing capability of the source network computing converged function node is less than a processing capability threshold, or quality of communication between the source network computing converged function node and the terminal device is less than a communication quality threshold.

Based on the foregoing technical solution, when the first condition is met, the source network computing converged function node may not be able to provide a service that meets a requirement of the terminal device. Therefore, the terminal device determines to switch the network computing converged function node, so as to switch to the target network computing converged function node that can provide the service that meets the requirement of the terminal device, thereby improving user experience.

With reference to the third aspect, in some implementations of the third aspect, the switching indication information or the second switching request information includes information about the target network computing converged function node, and the method further includes: The terminal device determines the target network computing converged function node.

With reference to the third aspect, in some implementations of the third aspect, the switching indication information is included at an SDAP layer or a PDU layer of the third data packet.

According to a fourth aspect, a switching method is provided. The method may be performed by a converged management function network element, or may be performed by a component (for example, a chip or a circuit) of the converged management function network element. This is not limited. The following uses an example in which the method is performed by the converged management function network element for description.

The method includes: The converged management function network element sends second information to each of a plurality of network computing converged function nodes, where the second information includes information about an access network device; the converged management function network element sends third information to the access network device, where the third information includes information about the plurality of network computing converged function nodes, and the third information further indicates that a first network computing converged function node in the plurality of network computing converged function nodes is configured to provide a service for a terminal device; and the converged management function network element sends fourth information to the access network device, where the fourth information is used by the access network device to determine to switch from a third interface to a fourth interface to transmit an uplink data packet from the terminal device, the third interface is an interface between the access network device and the first network computing converged function node, and the fourth interface is an interface between the access network device and a second network computing converged function node in the plurality of network computing converged function nodes.

Based on the foregoing technical solution, the converged management function network element may select the plurality of network computing converged function nodes in advance for a session of the terminal device, send the information about the access network device to each of the plurality of network computing converged function nodes, and send the information about the plurality of network computing converged function nodes to the access network device. Further, if a network computing converged function node that provides a service for the terminal device needs to be switched from the first network computing converged function node to the second network computing converged function node, the access network device may directly communicate with the second network computing converged function node, so that a delay of switching the network computing converged function node can be reduced.

With reference to the fourth aspect, in some implementations of the fourth aspect, that the converged management function network element sends the fourth information to the access network device includes: The converged management function network element sends the fourth information to the access network device when a first condition is met, where the first condition includes one or more of the following: a processing capability of the first network computing converged function node is less than a processing capability threshold, or quality of communication between the first network computing converged function node and the terminal device is less than a communication quality threshold.

Based on the foregoing technical solution, when the first condition is met, the first network computing converged function node may not be able to provide a service that meets a requirement of the terminal device. Therefore, the converged management function network element sends the fourth information to the access network device, so as to switch a network computing converged function node that provides a service for the terminal device to the second network computing converged function node, thereby improving user experience. For example, if the second network computing converged function node can provide the service that meets the requirement of the terminal device, user experience can be improved.

According to a fifth aspect, a switching method is provided. The method includes: An access network device sends first switching request information to a source network computing converged function node; the source network computing converged function node sends first switching acknowledgment information to the access network device; and the access network device determines, based on the first switching acknowledgment information, to switch from a first interface to a second interface to transmit an uplink data packet from a terminal device, where the first interface is an interface between the access network device and the source network computing converged function node, and the second interface is an interface between the access network device and a target network computing converged function node.

Based on the foregoing technical solution, the access network device may determine, based on the first switching request information from the source network computing converged function node, to switch from the first interface to the second interface to transmit the uplink data packet from the terminal device, so as to avoid service interruption of the terminal device caused because the access network device blindly switches from the first interface to the second interface to transmit the uplink data packet from the terminal device when the access network device cannot identify a data packet transmitted between the terminal device and the source network computing converged function node, thereby helping ensure service experience of the terminal device.

With reference to the fifth aspect, in some implementations of the fifth aspect, the first switching request information includes identification information of a first data flow and/or information about the target network computing converged function node, and the first data flow is a data flow whose transmission is to be switched from the first interface to the second interface.

With reference to the fifth aspect, in some implementations of the fifth aspect, the first switching acknowledgment information includes identification information of a second data flow, and the second data flow includes the first data flow and a data flow associated with the first data flow, or the second data flow includes a data flow associated with the first data flow, or the second data flow is a part or an entirety of the first data flow; and the second data flow is a data flow whose transmission is to be switched from the first interface to the second interface.

With reference to the fifth aspect, in some implementations of the fifth aspect, the first switching acknowledgment information includes information about a timer, and that the access network device determines, based on the first switching acknowledgment information, to switch from the first interface to the second interface to transmit the uplink data packet from the terminal device includes: The access network device determines, based on the information about the timer, to switch from the first interface to the second interface to transmit the uplink data packet from the terminal device after the timer expires.

With reference to the fifth aspect, in some implementations of the fifth aspect, the method further includes: A converged management function network element sends the information about the target network computing converged function node to the access network device.

With reference to the fifth aspect, in some implementations of the fifth aspect, after the access network device determines to switch from the first interface to the second interface to transmit the uplink data packet from the terminal device, the method further includes: The terminal device sends the uplink data packet to the access network device; and the access network device forwards the uplink data packet to the target network computing converged function node through the second interface.

According to a sixth aspect, a communication apparatus is provided. The communication apparatus has a function of implementing the method according to any one of the first aspect or the possible implementations of the first aspect. The function may be implemented by hardware, or may be implemented by hardware executing corresponding software. The hardware or the software includes one or more units, for example, a transceiver unit and/or a processing unit, corresponding to the foregoing function.

According to a seventh aspect, a communication apparatus is provided. The communication apparatus has a function of implementing the method according to any one of the second aspect or the possible implementations of the second aspect. The function may be implemented by hardware, or may be implemented by hardware executing corresponding software. The hardware or the software includes one or more units, for example, a transceiver unit and/or a processing unit, corresponding to the foregoing function.

According to an eighth aspect, a communication apparatus is provided. The communication apparatus has a function of implementing the method according to any one of the third aspect or the possible implementations of the third aspect. The function may be implemented by hardware, or may be implemented by hardware executing corresponding software. The hardware or the software includes one or more units, for example, a transceiver unit and/or a processing unit, corresponding to the foregoing function.

According to a ninth aspect, a communication apparatus is provided. The communication apparatus has a function of implementing the method according to any one of the fourth aspect or the possible implementations of the fourth aspect. The function may be implemented by hardware, or may be implemented by hardware executing corresponding software. The hardware or the software includes one or more units, for example, a transceiver unit and/or a processing unit, corresponding to the foregoing function.

According to a tenth aspect, a communication apparatus is provided, including a processor. The processor is coupled to a memory, and may be configured to execute instructions in the memory, to implement the method according to any one of the first aspect and the possible implementations of the first aspect. For example, the communication apparatus further includes the memory. For example, the communication apparatus further includes a communication interface, and the processor is coupled to the communication interface.

In an implementation, the communication apparatus is an access network device. When the communication apparatus is the access network device, the communication interface may be a transceiver or an input/output interface.

In another implementation, the communication apparatus is a chip disposed in the access network device. When the communication apparatus is the chip disposed in the access network device, the communication interface may be an input/output interface.

For example, the transceiver may be a transceiver circuit. For example, the input/output interface may be an input/output circuit.

According to an eleventh aspect, a communication apparatus is provided, including a processor. The processor is coupled to a memory, and may be configured to execute instructions in the memory, to implement the method according to any one of the second aspect and the possible implementations of the second aspect. For example, the communication apparatus further includes the memory. For example, the communication apparatus further includes a communication interface, and the processor is coupled to the communication interface.

In an implementation, the communication apparatus is a first device. When the communication apparatus is the first device, the communication interface may be a transceiver or an input/output interface.

In another implementation, the communication apparatus is the chip disposed in the first device. When the communication apparatus is the chip disposed in the first device, the communication interface may be an input/output interface.

For example, the transceiver may be a transceiver circuit. For example, the input/output interface may be an input/output circuit.

According to a twelfth aspect, a communication apparatus is provided, including a processor. The processor is coupled to a memory, and may be configured to execute instructions in the memory, to implement the method according to any one of the third aspect and the possible implementations of the third aspect. For example, the communication apparatus further includes the memory. For example, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip disposed in the terminal device. When the communication apparatus is the chip disposed in the terminal device, the communication interface may be an input/output interface.

For example, the transceiver may be a transceiver circuit. For example, the input/output interface may be an input/output circuit.

According to a thirteenth aspect, a communication apparatus is provided, including a processor. The processor is coupled to a memory, and may be configured to execute instructions in the memory, to implement the method according to any one of the fourth aspect and the possible implementations of the fourth aspect. For example, the communication apparatus further includes the memory. For example, the communication apparatus further includes a communication interface, and the processor is coupled to the communication interface.

In an implementation, the communication apparatus is a converged management function network element. When the communication apparatus is the converged management function network element, the communication interface may be a transceiver or an input/output interface.

In another implementation, the communication apparatus is a chip disposed in the converged management function network element. When the communication apparatus is the chip disposed in the converged management function network element, the communication interface may be an input/output interface.

For example, the transceiver may be a transceiver circuit. For example, the input/output interface may be an input/output circuit.

According to a fourteenth aspect, a processor is provided, including an input circuit, an output circuit, and a processing circuit. The processing circuit is configured to: receive a signal through the input circuit, and transmit a signal through the output circuit, so that the processor performs the method according to any one of the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a fifteenth aspect, a processing apparatus is provided, including a processor and a memory. The processor is configured to: read instructions stored in the memory, receive a signal through a receiver, transmit a signal through a transmitter, and perform the method according to any one of the possible implementations of the first aspect to the fourth aspect.

For example, there are one or more processors, and there are one or more memories.

For example, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that a related data exchange process, for example, sending first information, may be a process of outputting the first information from the processor, and receiving the first information may be a process of receiving the first information by the processor. Specifically, data output by the processor may be output to the transmitter, and input data received by the processor may be from the receiver. The transmitter and the receiver may be collectively referred to as a transceiver.

The processing apparatus according to the fifteenth aspect may be one or more chips. The processor in the processing apparatus may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. The memory may be integrated into the processor, or may be located outside the processor and exist independently.

According to a sixteenth aspect, a computer program product is provided. The computer program product includes a computer program (which may also be referred to as code or instructions), and when the computer program is run, a computer is enabled to perform the method according to any one of the possible implementations of the first aspect to the fourth aspect.

According to a seventeenth aspect, a computer-readable storage medium is provided. The computer-readable storage medium stores a computer program (which may also be referred to as code or instructions), and when the computer program is run on a computer, the method according to any one of the possible implementations of the first aspect to the fourth aspect is performed.

According to an eighteenth aspect, a communication system is provided, including the foregoing access network device and first device. The access network device is configured to perform the method according to any one of the first aspect and the possible implementations of the first aspect, and the first device is configured to perform the method according to any one of the second aspect and the possible implementations of the second aspect.

Optionally, the communication system may further include a terminal device, and the terminal device is configured to perform the method according to any one of the third aspect and the possible implementations of the third aspect.

Optionally, the communication system further includes a converged management function network element, and the converged management function network element is configured to perform the method according to any one of the fourth aspect and the possible implementations of the fourth aspect.

### BRIEF DESCRIPTION OF DRAWINGS

FIG. 1 shows a system architecture applicable to a method according to an embodiment of this application;
FIG. 2 shows a network architecture of cloud-network-computing mobile communication applicable to a method according to an embodiment of this application;
FIG. 3 is a schematic flowchart of a method 300 according to an embodiment of this application;
FIG. 4 is a schematic flowchart of a method 400 according to an embodiment of this application;
FIG. 5 is a schematic flowchart of a method 500 according to an embodiment of this application;
FIG. 6 is a schematic flowchart of a method 600 according to an embodiment of this application;
FIG. 7 is a schematic flowchart of a method 700 according to an embodiment of this application;
FIG. 8 is a block diagram of a communication apparatus according to an embodiment of this application;
FIG. 9 is a block diagram of a communication device according to another embodiment of this application; and
FIG. 10 is a diagram of a chip system according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system or a future communication system, and the like. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a sidelink (sidelink) communication system, a machine-to-machine (machine-to-machine, M2M) communication system, an internet of things (internet of things, IoT) communication system, a vehicle-to-everything (vehicle-to-everything, V2X) communication system, an uncrewed aerial vehicle (uncrewed aerial vehicle, UAV) communication system, or another communication system.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, unless otherwise specified, "a plurality of" means two or more. "At least one of the following items (pieces)" or a similar expression thereof means any combination of these items, including a singular item (piece) or any combination of plural items (pieces). For example, at least one (piece) of a, b, or c may represent: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of network architectures and emergence of new service scenarios, the technical solutions provided in embodiments of this application are also applicable to similar technical problems.

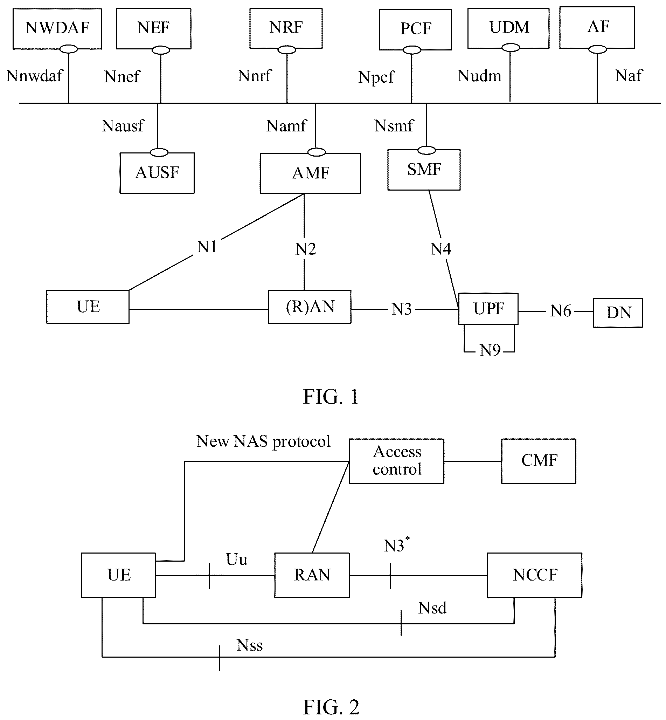

For ease of understanding of embodiments of this application, an application scenario of embodiments of this application is first described in detail with reference to FIG. 1.

A system architecture shown in FIG. 1 may include the following devices.
1. User equipment (user equipment, UE) may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved PLMN, or the like. This is not limited in embodiments of this application.
2. An access network (access network, AN) provides a network access function for an authorized user in a specific area, and can use transmission tunnels with different quality based on a user level, a service requirement, and the like. The access network may be access networks using different access technologies. Conventional access network technologies include: a radio access network technology used in a 3rd generation (3rd generation, 3G) system, a radio access network technology used in a 4th generation (4th generation, 4G) system, or a next generation radio access network (next generation radio access network, NG-RAN) technology (for example, a radio access technology used in a 5G system).

An access network that implements an access network function based on a wireless communication technology may be referred to as a radio access network (radio access network, RAN). The radio access network can manage a radio resource, and provide an access service for a terminal, to further complete forwarding of a control signal and user data between the terminal and a core network.

A radio access network device may be, for example, a NodeB (NodeB), an evolved NodeB (evolved NodeB, eNB or eNodeB), a next generation NodeB (next generation Node base station, gNB) in a 5G mobile communication system, a base station in a future mobile communication system, or an access point (access point, AP) in a Wi-Fi wireless hotspot system, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology and a specific device form that are used by the radio access network device are not limited in embodiments of this application.

3. An access management network element is mainly configured for mobility management and access management, is responsible for transferring a user policy between user equipment and a policy control function (policy control function, PCF) network element, and may be configured to implement a function other than session management in a mobility management entity (mobility management entity, MME) function, for example, an access authorization (authentication) function.

In a 5G communication system, the access management network element may be an access and mobility management function (access and mobility management function, AMF) network element. In a future communication system, the access management network element may be an AMF network element, or may have another name. This is not limited in this application.

4. A session management network element is mainly configured for session management, assignment and management of an internet protocol (internet protocol, IP) address of user equipment, selection and management of a user plane function, termination of interfaces towards policy control and charging functions, downlink data communication, and the like.

In a 5G communication system, the session management network element may be a session management function (session management function, SMF) network element. In a future communication system, the session management network element may be an SMF network element, or may have another name. This is not limited in this application.

5. A user plane network element is configured for packet routing and forwarding, quality of service (quality of service, QoS) handling for user plane data, completion of user plane data forwarding, session/flow-level charging statistics collection, a bandwidth limiting function, and the like.

In a 5G communication system, the user plane network element may be a user plane function (user plane function, UPF) network element. In a future communication system, the user plane network element may be a UPF network element, or may have another name. This is not limited in this application.

6. A data network element is configured to provide a network for data transmission.

In a 5G communication system, the data network element may be a data network (data network, DN) element. In a future communication system, the data network element may be a DN network element, or may have another name. This is not limited in this application.

7. A policy control network element is configured to: support a unified policy framework to govern network behavior, provide policy rule information for a control plane function network element (for example, an AMF network element or an SMF network element), and the like.

In a 4G communication system, the policy control network element may be a policy and charging rules function (policy and charging rules function, PCRF) network element. In a 5G communication system, the policy control network element may be a PCF network element. In a future communication system, the policy control network element may be a PCF network element, or may have another name. This is not limited in this application.

8. A data management network element is configured for identification handling of user equipment, access authentication, registration, mobility management, and the like.

In a 4G communication system, the data management network element may be a home subscriber server (home subscriber server, HSS) network element. In a 5G communication system, the data management network element may be a unified data management (unified data management, UDM) network element. In a future communication system, the data management network element may be a UDM network element, or may have another name. This is not limited in this application.

9. A network exposure function (network exposure function, NEF) network element is configured to securely expose a service and a capability that are provided by a 3rd generation partnership project (3rd generation partnership project, 3GPP) network function.

10. An application function (application function, AF) network element provides an application layer service for UE. When providing a service for the UE, the AF has requirements on a QoS policy and a charging (charging) policy, and needs to notify a network. In addition, the AF also needs to obtain application-related information fed back by a core network. The AF may have all AF functions defined in the technology specification (technology specification, TS) 23.501 R-15, and have a related function for an application service. In other words, in a user plane architecture, an application server and the UE perform user plane communication along a path of UE-RAN-UPF-AF. The AF may further communicate with another network function (network function, NF) in a 5G core network (5G core network, 5GC) in a control plane architecture through an NEF, for example, communicate with a PCF through the NEF. If the AF is arranged by a 5GC operator, the AF may alternatively be in the control plane architecture, that is, the AF is in a trusted zone, and directly communicates with another NF in the 5GC without using the NEF, for example, directly communicates with the PCF.

11. A network data analytics function (network data analysis function, NWDAF) network element may be configured to: collect data from a network element, an AF, and an operations, administration, and maintenance (operation administration and maintenance, OAM), analyze the data by using solutions such as machine learning and artificial intelligence, and feed back the data to the network element, the AF, and the like for network or service configuration optimization, to provide better network quality and service experience.

12. A network repository function (network repository function, NRF) network element may be configured to: support a network element discovery function, and provide network element information corresponding to a network element type based on a request of another network element. The NRF may further provide network element management services, for example, network element registration, update, and de-registration, and network element status subscription and push.

13. An authentication server function (authentication server function, AUSF) network element is mainly responsible for authenticating a user, to determine whether to allow the user or a device to access the network.

In FIG. 1, N1, N2, N3, N4, N6, N9, Nnwdaf, Nnef, Nnrf, Npcf, Nudm, Naf, Nausf, Namf, and Nsmf are interface sequence numbers. For meanings of these interface sequence numbers, refer to meanings defined in 3GPP TS 23.501.

It should be understood that the foregoing network architecture used in embodiments of this application is merely an example for description, and a network architecture applicable to embodiments of this application is not limited thereto. Any network architecture that can implement the functions of the foregoing network elements is applicable to embodiments of this application.

It should be further understood that the AMF, the SMF, the UPF, the NEF, the PCF, the UDM, the NWDAF, the NRF, the AUSF, and the like shown in FIG. 1 may be understood as network elements configured to implement different functions in the core network, for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in a 6G network, a part or all of the foregoing network elements may still use terms in 5G, or may use other names. A name of an interface between network elements in FIG. 1 is merely an example. In specific implementation, the name of the interface may be another name. This is not limited in this application.

FIG. 2 shows a network architecture of cloud-network-computing mobile communication, including UE, a RAN, an access control function, a converged management function (converged management function, CMF) network element, and a network computing converged function (network computing converged function, NCCF) network element. The NCCF may also be referred to as a computing network converged function (computing network converged function, CNCF) network element.

Similar to an AMF in a 5G system, the access control function provides UE access control and UE paging functions.

Similar to a function combination of SMF+PCF+AF in the 5G system, the CMF may provide the following functions: selecting an appropriate NCCF for the UE based on microservice information or an application requested by the UE, an NCCF capability, a load (load), and network layer information; and establishing a corresponding network layer bearer (or referred to as a session, or session+user plane channel) for a connection between the UE and the NCCF based on a request of the UE or a request of the NCCF.

The NCCF may provide the following functions: being responsible for providing a computing power service for a computing service request of the UE, including an application (application, APP) computing service, a communication function, and network functions virtualization (network functions virtualization, NFVI); transmitting application programming interface (application programming interface, API) invocation information required by an application client (app client, AC) to invoke an API of a microservice; transmitting an application layer data flow associated with the microservice; and transmitting a hypertext transfer protocol (hypertext transfer protocol, HTTP) message (message) between a world wide web (world wide web, Web) browser and a Web server (server). For example, the NCCF may provide the APP computing service, which may specifically include a rendering service, for example, rendering a picture, a video, or a model object output by modeling software. The NCCF may provide an artificial intelligence (artificial intelligence, AI) service, for example, AI inference computing or video/picture recognition.

N3* shown in FIG. 2 is a reference point/interface between the RAN and the NCCF. The interface may implement joint scheduling of N3 and an application layer. A core network service data platform is responsible for application data receiving and sending, and a data buffer function. The RAN generates N3 downlink scheduling information in real time based on an air interface resource status, and reports the N3 downlink scheduling information to the service data platform. Parameters such as a sending rate and a sending moment need to be adjusted for sending of downlink data based on the scheduling information fed back by the RAN.

Nsd shown in FIG. 2 is a reference point between the UE and the NCCF, and is used for data exchange on a transport layer data plane.

Nss shown in FIG. 2 is a reference point between the UE and the NCCF, and is used for data exchange on a transport layer control plane.

Based on the network architecture shown in FIG. 2, an embodiment of this application provides a switching method, so as to switch another NCCF node for UE without affecting service continuity of the UE, thereby improving user experience.

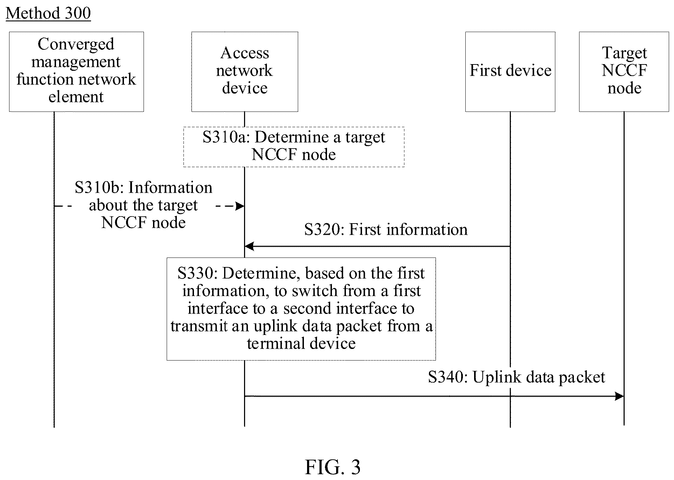

FIG. 3 is a schematic flowchart of a method 300 according to an embodiment of this application. As shown in FIG. 3, the method 300 may include the following steps.

Optionally, if an access network device has not determined a target NCCF node before performing the method 300, the method 300 further includes S310a or S310b.

S310a: The access network device determines the target NCCF node.

The target NCCF node is an NCCF node that provides a service for a terminal device after the access network device performs switching of an NCCF node.

In a possible implementation, the switching of the NCCF node performed by the access network device may also be referred to as switching of an interface, and the interface is an interface between the access network device and the NCCF node. For example, switching from an NCCF node #1 to an NCCF node #2 performed by the access network device may be referred to as switching from an interface #1 to an interface #2, where the interface #1 is an interface between the access network device and the NCCF node #1, and the interface #2 is an interface between the access network device and the NCCF node #2. The interface between the access network device and the NCCF node may also be referred to as an N3 interface or an N3* interface.

In a possible implementation, the switching of the NCCF node performed by the access network device may also be referred to as switching of a path, and the path is a path between the terminal device and the NCCF node. For example, switching from an NCCF node #1 to an NCCF node #2 performed by the access network device may be referred to as switching from a path #1 to a path #2, where the path #1 is a path between the terminal device and the NCCF node #1, and the path #2 is a path between the terminal device and the NCCF node #2.

In a possible implementation, the switching of the NCCF node performed by the access network device may also be referred to as switching of a connection, and the connection is a connection between the access network device and the NCCF node. For example, switching from an NCCF node #1 to an NCCF node #2 performed by the access network device may be referred to as switching from a connection #1 to a connection #2, where the connection #1 is a connection between the access network device and the NCCF node #1, and the connection #2 is a connection between the access network device and the NCCF node #2. The connection between the access network device and the NCCF node may also be referred to as an N3 connection, an N3* connection, an N3 tunnel, or an N3* tunnel.

For example, the target NCCF node meets a condition #1, where the condition #1 includes at least one of the following: a processing (processing) capability of the target NCCF node is higher than a processing capability of a source NCCF node; a processing capability of the target NCCF node is not lower than an initial processing capability of the source NCCF node; a deployment location of the target NCCF node is equivalent to a deployment location of the source NCCF node; or the deployment location of the target NCCF node is one level above the deployment location of the source NCCF node. The source NCCF node is an NCCF node that provides a service for the terminal device before the access network device performs switching of an NCCF node. In other words, the switching of the NCCF node performed by the access network device is switching from the source NCCF node to the target NCCF node.

A processing capability of an NCCF node (for example, the source NCCF node or the target NCCF node) is related to available resources of the NCCF node. More available resources of the NCCF node indicate a stronger processing capability of the NCCF node. The processing capability of the NCCF node may also be referred to as a processing level, a computing (computing) capability, or a computing level. The processing capability of the NCCF node includes at least one of a static processing level, a real-time processing level, and a predicted processing level. It should be noted that the processing capability of the NCCF node may change with the available resources of the NCCF node. For example, if a quantity of users served by the NCCF node increases, the available resources of the NCCF node decrease, and further, the processing capability of the NCCF node may decrease.

The initial processing capability of the source NCCF node is a processing capability when the source NCCF node starts to provide a service for the terminal device.

If the deployment location of the target NCCF node is equivalent to the deployment location of the source NCCF node, a difference between a first transmission delay and a second transmission delay does not exceed a duration threshold #1. The first transmission delay is a transmission delay between the target NCCF node and the access network device, the second transmission delay is a transmission delay between the source NCCF node and the access network device, and the duration threshold #1 may be a value predefined in a protocol. For example, an implementation in which the deployment location of the target NCCF node is equivalent to the deployment location of the source NCCF node is as follows: A difference between a first distance and a second distance does not exceed a distance threshold, and/or a first physical topology is the same as a second physical topology. The first distance is a distance between the target NCCF node and the access network device, the second distance is a distance between the source NCCF node and the access network device, and the distance threshold may be a value predefined in a protocol. The first physical topology is a physical topology between the target NCCF node and the access network device, and the second physical topology is a physical topology between the source NCCF node and the access network device. For example, if the target NCCF node and the source NCCF node are located on a same access ring, the deployment location of the target NCCF node is equivalent to the deployment location of the source NCCF node.

It may be understood that, if the processing capability of the target NCCF node is higher than the capability of the source NCCF node, the target NCCF node may provide a more efficient service for the terminal device, thereby improving service experience of the terminal device. If the processing capability of the target NCCF node is higher than the initial capability of the source NCCF node, when the processing capability of the source NCCF node decreases, the target NCCF node provides a service for the terminal device. This helps provide a more efficient service for the terminal device, thereby improving service experience of the terminal device. If the deployment location of the target NCCF node is equivalent to the deployment location of the source NCCF node, a transmission delay between the target NCCF node and the terminal device may be prevented from being greater than a transmission delay between the source NCCF node and the terminal device. If the deployment location of the target NCCF node is one level above the deployment location of the source NCCF node, the processing capability of the target NCCF node is higher than the processing capability of the source NCCF node. Further, when the target NCCF node provides a service for the terminal device, it is beneficial to provide a more efficient service for the terminal device, thereby improving service experience of the terminal device.

In a possible implementation, that the access network device determines the target NCCF node includes: The access network device determines the target NCCF node when a first condition is met. The first condition includes one or more of the following: a processing capability of the source NCCF node is lower than a processing capability threshold, or quality of communication between the source NCCF node and the terminal device is lower than a communication quality threshold #1.

The quality of communication between the terminal device and the source NCCF node may be represented by one or more of the following parameters: a delay, a jitter, a packet loss rate, or a bandwidth. Correspondingly, the communication quality threshold #1 may include one or more of the following: a delay threshold #1, a jitter threshold #1, a packet loss rate threshold #1, or a bandwidth threshold #1.

Optionally, the first condition further includes one or more of the following: duration for which the processing capability of the source NCCF node is lower than the processing capability threshold reaches a duration threshold #2, or duration for which the quality of communication between the source NCCF node and the terminal device is lower than the communication quality threshold #1 reaches a duration threshold #3. The duration threshold #2 and the duration threshold #3 may be values predefined in a protocol. The duration threshold #2 is equal to the duration threshold #3, or the duration threshold #2 is not equal to the duration threshold #3.

The processing capability threshold and the communication quality threshold #1 are related to a service that the terminal device expects or requests an NCCF node to provide. It should be understood that, if the processing capability of the source NCCF node is lower than the processing capability threshold, and/or the quality of communication between the source NCCF node and the terminal device is lower than the communication quality threshold #1, the source NCCF node cannot provide the service that the terminal device expects or requests the NCCF node to provide.

The following describes a manner in which the access network device determines whether the processing capability of the source NCCF node is lower than the processing capability threshold.

For example, the access network device receives information #1 from a network management system, where the information #1 is used to determine the processing capability of the source NCCF node. After determining the processing capability of the source NCCF node based on the information #1, the access network device may determine whether the processing capability of the source NCCF node is lower than the processing capability threshold.

The information #1 may include one or more of the following: the processing capability of the source NCCF node, resource configuration information of the source NCCF node, real-time processing resource information of the source NCCF node, a quantity of users served by the source NCCF node, a ratio of the quantity of users served by the source NCCF node to a maximum quantity of users that can be served by the source NCCF node, a quantity of connections served by the source NCCF node, or a ratio of the quantity of connections served by the source NCCF node to a maximum quantity of connections that can be served by the source NCCF node. The real-time processing resource information of the source NCCF node includes one or more of the following: resource usage of the source NCCF node or remaining available resources of the source NCCF node.

Optionally, before the access network device receives the information #1 from the network management system, the method 300 further includes: The access network device sends a request message #1 to the network management system, where the request message #1 is used to request the information #1. The request message #1 may be a subscription request message. Further, the network management system may send the information #1 to the access network device based on the request message #1 when the processing capability of the source NCCF node changes. For example, when the processing capability of the source NCCF node is lower than the processing capability threshold, the network management system sends the information #1 to the access network device.

For another example, the access network device receives information #2 from a converged management function network element, where the information #2 is used to determine the processing capability of the source NCCF node. After determining the processing capability of the source NCCF node based on the information #2, the access network device may determine whether the processing capability of the source NCCF node is lower than the processing capability threshold. For more descriptions of the information #2, refer to the information #1.

Optionally, before the access network device receives the information #2 from the converged management function network element, the method 300 further includes: The access network device sends a request message #2 to the converged management function network element, where the request message #2 is used to request the information #2. The request message #2 may be a subscription request message. Further, the converged management function network element may send the information #2 to the access network device based on the request message #2 when the processing capability of the source NCCF node changes.

The following describes a manner in which the access network device determines that the quality of communication between the source NCCF node and the terminal device is lower than the communication quality threshold #1.

For example, the access network device determines the quality of communication between the source NCCF node and the terminal device by monitoring quality of communication between the access network device and the terminal device and quality of communication between the access network device and the source NCCF node, and further determines whether the quality of communication between the terminal device and the source NCCF node is lower than the communication quality threshold #1.

The following describes a manner in which the access network device determines the target NCCF node.

Implementation 1: That the access network device determines the target NCCF node includes: The access network device receives information about at least one candidate NCCF node from the network management system; and the access network device determines the target NCCF node based on the information about the at least one candidate NCCF node.

The information about the candidate NCCF node includes one or more of the following: a processing capability of the candidate NCCF node, resource configuration information of the candidate NCCF node, real-time processing resource information of the candidate NCCF node, a quantity of users served by the candidate NCCF node, a ratio of the quantity of users served by the candidate NCCF node to a maximum quantity of users that can be served by the candidate NCCF node, a quantity of connections served by the candidate NCCF node, a ratio of the quantity of connections served by the candidate NCCF node to a maximum quantity of connections that can be served by the candidate NCCF node, quality of communication between the candidate NCCF node and the access network device, an identifier of the candidate NCCF node, an IP address of the candidate NCCF node, or a port number of the candidate NCCF node. The IP address and/or the port number of the candidate NCCF node may be referred to as N3* tunnel information corresponding to the candidate NCCF node, or connection information corresponding to the candidate NCCF node.

The access network device may select at least one NCCF node that meets the condition #1 from the at least one candidate NCCF node based on the information about the at least one candidate NCCF node. Further, the access network device may determine the target NCCF node from the at least one NCCF node that meets the condition #1. For example, the target NCCF node may be an NCCF node with a highest processing capability in the at least one NCCF node that meets the condition #1, or may be an NCCF node with a minimum load (load) (for example, serving a minimum quantity of users and/or a minimum quantity of connections) in the at least one NCCF node that meets the condition #1.

Optionally, each candidate NCCF node in the at least one candidate NCCF node meets the condition #1. For example, the access network device may send a request message #3 to the network management system, where the request message #3 is used to request information about the NCCF node that meets the condition #1. Further, the network management system may send information about at least one candidate NCCF node that meets the condition #1 to the access network device based on the request message #3.

Optionally, quality of communication between each candidate NCCF node in the at least one candidate NCCF node and the access network device is higher than a communication quality threshold #2. For example, the access network device may send a request message #4 to the network management system, where the request message #4 is used to request information about an NCCF node whose quality of communication with the access network device is higher than the communication quality threshold #2. Further, the network management system may send, to the access network device based on the request message #3, information about at least one candidate NCCF node whose quality of communication with the access network device is higher than the communication quality threshold.

Implementation 2: That the access network device determines the target NCCF node includes: The access network device receives information about at least one candidate NCCF node from the converged management function network element; and the access network device determines the target NCCF node based on the information about the at least one candidate NCCF node.

For more descriptions of the implementation 2, refer to the foregoing implementation 1.

It should be noted that the converged management function network element may obtain the information about the at least one candidate NCCF node from the network management system, or obtain the information about the at least one candidate NCCF node from an NWDAF, or obtain the information about the at least one candidate NCCF node from an enhanced NRF. For example, the enhanced NRF may be represented as an NRF*. Compared with an NRF defined in an existing protocol, the NRF* may store information about at least one NCCF.

S310b: The converged management function network element sends information about the target NCCF node to the access network device.

Correspondingly, the access network device receives the information about the target NCCF node from the converged management function network element.

After receiving the information about the target NCCF node, the access network device may determine the target NCCF node based on the information about the target NCCF node. For the information about the target NCCF node, refer to the description about the information about the candidate NCCF node in S310a.

It should be understood that, after determining the target NCCF node, the converged management function network element may send the information about the target NCCF node to the access network device. For a manner in which the converged management network element determines the target NCCF node, refer to a manner in which the access network device determines the target NCCF node. For brevity, details are not described in this embodiment of this application.

After the access network device determines the target NCCF node, or the access network device receives the information about the target NCCF node, S320 to S340 continue to be performed in the method 300.

S320: A first device sends first information to the access network device.

Correspondingly, the access network device receives the first information from the first device.

The first device is the terminal device or the source NCCF node.

The first information is not limited in this embodiment of this application.

In a possible implementation, the first information is first switching acknowledgment (acknowledgment, ACK) information. Before the first device sends the first information to the access network device, the method 300 further includes: The access network device sends first switching request information to the first device. For more descriptions of the first switching ACK information, refer to the following method 400. For brevity, details are not described herein.

In a possible implementation, the first information is a switching indication packet. For example, the switching indication packet is an end marker (end marker) packet. For more descriptions of the switching indication packet, refer to the following method 400. For brevity, details are not described herein.

In a possible implementation, the first device is the terminal device, the first information is packet indication information included in a first data packet, and the packet indication information indicates that the first data packet is an initial packet or a tail packet of a first task. In this implementation, that the access network device receives the first information from the first device includes: The access network device receives the first data packet from the first device. For more descriptions of the packet indication information, refer to the following method 500. For brevity, details are not described herein.

It should be noted that the first task (task) is a unit (unit) that implements specific service logic, and may belong to an application (application) or a service (service). For example, the first task may refer to the start to end of one rendering in an extended reality (extended reality, XR) application or a cloud game, the start to end of rendering of one frame of video, the start to end of a rendering of one or more groups of picture (group of picture, GOP), one inference (from the start to end of the inference) in an artificial intelligence (artificial intelligence, AI) application, or one (relatively) independent calculation in one AI inference. The first task may also be referred to as a first transaction (transaction).

In a possible implementation, the first device is the terminal device, and the first information is switching indication information included in a third data packet. In this implementation, that the access network device receives the first information from the first device includes: The access network device receives the third data packet from the first device. For more descriptions of the switching indication information, refer to the following method 600. For brevity, details are not described herein.

In a possible implementation, the first device is the terminal device, and the first information is second switching request information. For more descriptions of the second switching request information, refer to the following method 600. For brevity, details are not described herein.

S330: The access network device determines, based on the first information, to switch from a first interface to a second interface to transmit an uplink data packet from the terminal device.

The first interface is an interface between the access network device and the source NCCF node, and the first interface may also be referred to as a first N3 interface or a first N3* interface. The second interface is an interface between the access network device and the target NCCF node, and the second interface may also be referred to as a second N3 interface or a second N3* interface.

Refer to the foregoing description in S310a. That the access network device switches from the first interface to the second interface to transmit the uplink data packet from the terminal device may be replaced with that the access network device switches from a first path to a second path to transmit the uplink data packet from the terminal device, or may be replaced with that the access network device switches from a first connection to a second connection to transmit the uplink data packet from the terminal device. The first path is a path between the terminal device and the source NCCF node, and the second path is a path between the terminal device and the target NCCF node. The first connection is a connection between the access network device and the source NCCF node, and the second connection is a connection between the access network device and the target NCCF node.

For example, switching from the first interface to the second interface to transmit the uplink data packet from the terminal device is specifically: updating a first mapping relationship to a second mapping relationship. The first mapping relationship is a mapping relationship between a first data radio bearer (data radio bearer, DRB) between the terminal device and the access network device and the first interface, and the second mapping relationship is a mapping relationship between the first DRB and the second interface.

In a possible implementation, when the access network device updates the first mapping relationship to the second mapping relationship, the access network device may further store (or maintain) a third mapping relationship. The third mapping relationship is a mapping relationship between a second DRB between the terminal device and the access network device and the first interface. The second DRB is different from the first DRB. In other words, a data flow carried on the first DRB is different from a data flow carried on the first DBR.

It may be understood that, when the access network device further stores the third mapping relationship, after determining to switch from the first interface to the second interface to transmit the uplink data packet from the terminal device, the access network device forwards, to the target network computing converged function node through the second interface, the uplink data packet received from the terminal device through the first DRB, and forwards, to the source network computing converged function node through the first interface, the uplink data packet received from the terminal device through the second DRB.

It may be further understood that, before the access network device determines to switch from the first interface to the second interface to transmit the uplink data packet from the terminal device, the access network device stores (or maintains) a fourth mapping relationship. The fourth mapping relationship is a mapping relationship between the first DRB and the second DRB and the first interface. When the access network device stores the fourth mapping relationship, the access network device forwards, to the source network computing converged function node through the first interface, the uplink data packet received from the terminal device through the first DRB and the second DRB.

The following describes how the access network device determines, based on the first information, to switch from the first interface to the second interface to transmit the uplink data packet from the terminal device.

In a possible implementation, if the first information is the first switching ACK information, when receiving the first switching ACK information, the access network device determines to switch from the first interface to the second interface to transmit the uplink data packet from the terminal device.

In a possible implementation, if the first information is the switching indication packet, when receiving the switching indication packet, the access network device determines to switch from the first interface to the second interface to transmit the uplink data packet from the terminal device.

In a possible implementation, if the first information is the packet indication information, when determining, based on the packet indication information, that the first data packet is the initial packet of the first task, the access network device determines to switch from the first interface to the second interface to transmit the uplink data packet from the terminal device.

In a possible implementation, if the first information is the packet indication information, and the access network device determines, based on the packet indication information, that the first data packet is the tail packet of the first task, when receiving a second data packet, the access network device determines to switch from the first interface to the second interface to transmit the uplink data packet from the terminal device. The second data packet is an uplink data packet received by the access network device from the terminal device after the first data packet. The second data packet may be a data packet of a second task, the second task is a task performed after the first task, and the second task and the first task belong to a same application or service, or the second task and the first task belong to different applications or services.

In a possible implementation, if the first information is the switching indication information, when receiving the switching indication information, the access network device determines to switch from the first interface to the second interface to transmit the uplink data packet from the terminal device.

In a possible implementation, if the first information is the second switching request information, when receiving the second switching request information, the access network device determines to switch from the first interface to the second interface to transmit the uplink data packet from the terminal device.

S340: The access network device sends the uplink data packet to the target NCCF node.

Correspondingly, the target NCCF node receives the uplink data packet from the access network device.

It should be understood that the access network device sends the uplink data packet to the target NCCF node through the second interface. The uplink data packet is an uplink data packet received by the access network device from the terminal device.

If the access network device determines, based on the first information, to switch from the first interface to the second interface to transmit the uplink data packet from the terminal device, after receiving the uplink data packet from the terminal device, the access network device sends the uplink data packet to the target NCCF node through the second interface.

For example, if the first information is the first switching ACK information, the access network device sends, to the target NCCF node through the second interface, the uplink data packet received from the terminal device after the first switching ACK information.

For another example, if the first information is the switching indication packet, the access network device sends, to the target NCCF node through the second interface, the uplink data packet received from the terminal device after the switching indication packet. In other words, after the access network device receives the switching indication packet, if the access network device receives the uplink data packet from the terminal device, the access network device sends the received uplink data packet to the target NCCF node through the second interface.

For another example, if the first information is the packet indication information included in the first data packet, and the packet indication information indicates that the first data packet is the initial packet of the first task, the access network device sends, to the target NCCF node through the second interface, the first data packet and at least one uplink data packet received from the terminal device after the first data packet.

For another example, if the first information is the packet indication information included in the first data packet, and the packet indication information indicates that the first data packet is the tail packet of the first task, the access network device sends, to the target NCCF node through the second interface, the second data packet received from the terminal device after the first data packet.

For another example, if the first information is the switching indication information included in the third data packet, the access network device sends, to the target NCCF node through the second interface, the third data packet and at least one uplink data packet received from the terminal device after the third data packet.

For another example, if the first information is the second switching request information, the access network device sends, to the target NCCF node through the second interface, the uplink data packet received from the terminal device after the second switching request information.

It should be understood that, before the access network device determines to switch from the first interface to the second interface to transmit the uplink data packet from the terminal device, an interface used by the access network device is the first interface. When the access network device uses the first interface, the terminal device exchanges data with the source NCCF node through the access network device, that is, if the access network device receives the uplink data packet from the terminal device, the access network device sends the received uplink data packet to the source NCCF node.

Optionally, after receiving the uplink data packet from the terminal device through the access network device, the target NCCF node may send a downlink data packet to the terminal device through the access network device, that is, the target NCCF sends the downlink data packet to the access network device, so that the access network device sends, to the terminal device, the downlink data packet received from the target NCCF node.

In this embodiment of this application, the access network device may determine, based on the first information from the terminal device or the source NCCF node, to switch from the first interface to the second interface to transmit the uplink data packet from the terminal device, so as to avoid service interruption of the terminal device caused because the access network device blindly switches from the first interface to the second interface to transmit the uplink data packet from the terminal device when the access network device cannot identify a data packet transmitted between the terminal device and the source NCCF node, thereby helping ensure service experience of the terminal device.

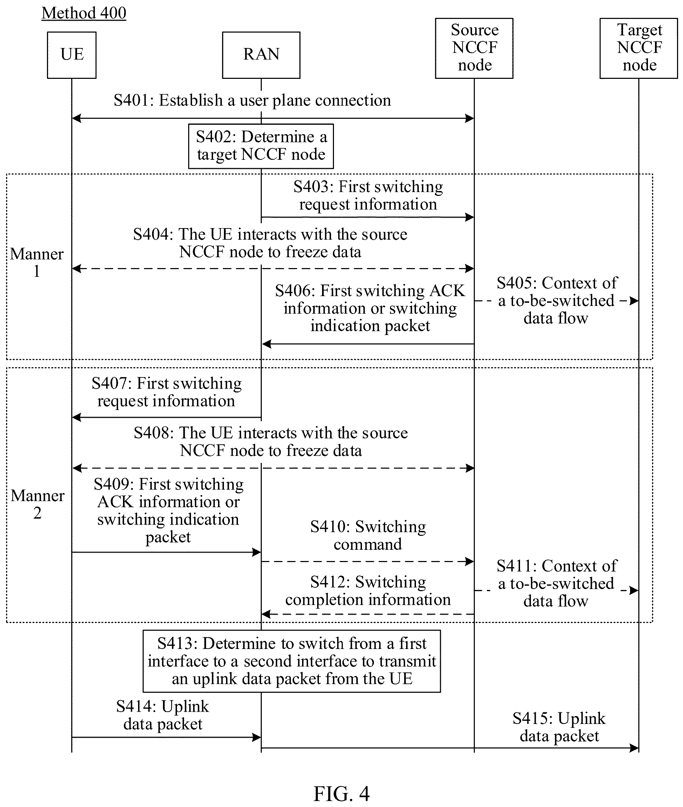

With reference to FIG. 4 to FIG. 7, the following describes the switching method provided in embodiments of this application. It should be noted that, in FIG. 4 to FIG. 7, UE is an example of the terminal device, a RAN is an example of the access network device, and a CMF is an example of the converged management function network element.

FIG. 4 is a schematic flowchart of a method 400 according to an embodiment of this application. As shown in FIG. 4, the method 400 may include the following steps.

S401: UE establishes a user plane connection to a source NCCF node.

In S401, the UE registers with a network, and establishes the user plane connection to the source NCCF node. It should be understood that a termination point of a session corresponding to the user plane connection established between the UE and the source NCCF is the source NCCF node, that is, an uplink data packet sent by the UE to the source NCCF node through a RAN is processed by the source NCCF node. Correspondingly, the source NCCF node may send a downlink data packet to the UE through the RAN.

For a manner in which the UE registers with the network and a manner in which the UE establishes the user plane connection to the source NCCF node, refer to an existing protocol or standard. For brevity, details are not described in this embodiment of this application.

S402: The RAN determines a target NCCF node.

For S402, refer to S310a in the foregoing method 300.

It should be noted that, in this embodiment of this application, an example in which S402 is performed in the method 400 is used for description. In a possible implementation, S402 may be replaced with S320b in the foregoing method 300, that is, the RAN may receive information about the target NCCF node from a CMF.

After the RAN determines the target NCCF node, steps in a manner 1 or steps in a manner 2 continue to be performed in the method 400.

The following describes the steps included in the manner 1.

S403: The RAN sends first switching request information to the source NCCF node.

Correspondingly, the source NCCF node receives the first switching request information from the RAN.

The first switching request information may also be referred to as N3* switching request information or NCCF node switching request information. This is not limited in this embodiment of this application. The first switching request information may alternatively be a first switching request message.

Optionally, the first switching request information includes identification information of a first data flow and/or information about the target NCCF node. The first data flow is a data flow whose transmission is to be switched from a first interface to a second interface. A data flow #x is used as an example. Before determining to switch from the first interface to the second interface to transmit the uplink data packet from the terminal device, the access network device forwards the uplink data packet from the terminal device in the data flow #x to the source network computing converged function node through the first interface, and after determining to switch from the first interface to the second interface to transmit the uplink data packet from the terminal device, the access network device forwards the uplink data packet from the terminal device in the data flow #x to the target network computing converged function node through the second interface. In this case, the data flow #x is a data flow whose transmission is to be switched from the first interface to the second interface. For ease of description, a data flow whose transmission is to be switched from the first interface to the second interface is denoted as a to-be-switched data flow below.

The identification information of the first data flow may be one or more of the following corresponding to the first data flow: a QoS flow identifier (QoS flow identifier, QFI) list (list), an N3*QoS flow identifier, or an IP list. The first data flow may include all or a part of data flows transmitted between the UE and the source NCCF node. This is not limited in this embodiment of this application. For example, the first data flow may include a delay-sensitive data flow (for example, a data flow corresponding to a video or voice service) in all the data flows transmitted between the UE and the source NCCF node. It should be understood that the QoS flow mentioned in this embodiment of this application is a minimum granularity at which data transmission can be performed between the terminal device and the NCCF node, and the N3*QoS flow mentioned in this embodiment of this application is a minimum granularity at which direct data transmission can be performed between the RAN and the NCCF node.

It should be noted that, when the first data flow includes a plurality of data flows, different data flows correspond to different QFIs, or different data flows correspond to different IPs, or different data flows correspond to different N3*QoS flow identifiers. It should be further noted that one data flow may correspond to one service, or may correspond to a plurality of services.

The information about the target NCCF node may include one or more of the following: an identifier of the target NCCF node, an IP address of the target NCCF node, or connection information corresponding to the target NCCF node. The connection information corresponding to the target NCCF node includes an IP address and a port number of the target NCCF node.

A manner in which the RAN sends the first switching request information to the source NCCF node is not limited in this embodiment of this application.

In a possible implementation, the RAN sends the first switching request information to the source NCCF node through the CMF. For example, the RAN sends the first switching request information to the CMF, so that the CMF sends the first switching request information to the source NCCF node.

In a possible implementation, the RAN directly sends the first switching request information to the source NCCF node. For example, the RAN directly sends the first switching request information to the source NCCF node by using a user plane control protocol. For example, the first switching request information sent by the RAN to the source NCCF node is carried in a general packet radio service (general packet radio service, GPRS) tunneling protocol (GPRS tunneling protocol, GTP) message, and the GTP message may be a GTP-C control message.

Optionally, the manner 1 further includes S404.

S404: The UE interacts with the source NCCF node to freeze data.

For example, after the source NCCF node receives the first switching request information from the RAN, if the source NCCF node still has a downlink data packet to be sent to the UE, or one or more tasks performed between the UE and the source NCCF node have not been completed, the source NCCF node may interact with the UE to freeze application layer data interaction (for example, the UE stops sending an instruction flow for which uplink rendering is performed to the source NCCF node, and the source NCCF node stops sending a video flow for which downlink rendering is completed to the UE). For the task, refer to the description of the first task in the foregoing method 300.

For example, the source NCCF node sends information #3 to the UE, where the information #3 is used to request or indicates the UE to freeze application layer data interaction between the UE and the source NCCF node.

Optionally, if the first switching request information includes the identification information of the to-be-switched first data flow, the source NCCF node interacts with the UE to freeze application layer data interaction corresponding to the first data flow.

Optionally, after receiving the first switching request information, the source NCCF node may determine a data flow #1, so that the source NCCF node interacts with the UE to freeze application layer data interaction corresponding to the data flow #1. The data flow #1 is a to-be-switched data flow determined by the source NCCF node.

The data flow #1 determined by the source NCCF node may include all or a part of data flows transmitted between the source NCCF node and the UE. For example, the data flow #1 may include a delay-sensitive data flow in all the data flows transmitted between the UE and the source NCCF node. For another example, if the first switching request information includes the identification information of the first data flow, the data flow #1 may include all or a part of data flows in the first data flow. For another example, if the first switching request information includes the identification information of the first data flow, the data flow #1 may include the first data flow and a data flow associated with at least one data flow in the first data flow. Two data flows that are associated with each other may correspond to a same application or service.

Optionally, the manner 1 further includes S405.

S405: The source NCCF node sends a context of the to-be-switched data flow to the target NCCF node.

Correspondingly, the target NCCF node receives the context of the to-be-switched data flow from the source NCCF node.

The context of the to-be-switched data flow may include one or more of the following: an application layer checkpoint (checkpoint), data that is related to the to-be-switched data flow and that is buffered by the source NCCF node, or a protocol stack status between the source NCCF node and the UE.

For example, if application layer service continuity needs to be maintained, the source NCCF node may send the context of the switched data flow to the target NCCF node.

Optionally, the context that is of the to-be-switched data flow and that is sent by the source NCCF node to the target NCCF node includes contexts of all to-be-switched data flows, or includes a context of a data flow that needs to maintain application layer service continuity in all the to-be-switched data flows. All the to-be-switched data flows are the first data flow, or the data flow #1 determined by the source NCCF node. For descriptions of the data flow #1, refer to S404.

A manner in which the source NCCF node determines the target NCCF node is not limited in this embodiment of this application.

For example, if the first switching request information received by the source NCCF node includes the information about the target NCCF node, the source NCCF node may send the context of the to-be-switched data flow to the target NCCF node based on the information about the target NCCF node.

For another example, there is an association relationship between the source NCCF node and the target NCCF node, and the information about the target NCCF node may be preconfigured in the source NCCF node, so that the source NCCF node can send the context of the to-be-switched data flow to the target NCCF node based on the preconfigured information about the target NCCF node.

S406: The source NCCF node sends first switching ACK information or a switching indication packet to the RAN.

Correspondingly, the RAN receives the first switching ACK information or the switching indication packet from the source NCCF node.

The first switching ACK information may also be referred to as N3* switching acknowledgment information or NCCF node switching response information. This is not limited in this embodiment of this application. The first switching ACK information may alternatively be a first switching ACK message.

The switching indication packet is a special data packet, and the switching indication packet may not carry any data. For example, the switching indication packet is an end marker packet. For example, the switching indication packet is a protocol data unit (protocol data unit, PDU) end marker packet.

In a possible implementation, after the source NCCF node receives the first switching request information from the RAN, if the source NCCF node determines that an NCCF node can be switched, the source NCCF node sends the first switching ACK information or the switching indication packet to the RAN. For example, if S404 is performed in the method 400, or the source NCCF node has no downlink data packet to be sent to the UE, or one or more tasks performed between the source NCCF node and the UE have been completed, the source NCCF node determines that the NCCF node can be switched.

In a possible implementation, after receiving the first switching request information from the RAN, the source NCCF node may immediately send the first switching ACK information to the RAN, or may send the first switching ACK information to the RAN when it is not determined that the NCCF node can be switched. In this implementation, the first switching request information may include information about a timer, to indicate the RAN to switch from the first interface to the second interface to transmit the uplink data packet from the UE when the timer expires. The first interface is an interface between the source NCCF node and the RAN, and the second interface is an interface between the target NCCF node and the RAN.

The source NCCF node may determine the information about the timer based on transmission statuses of all the to-be-switched data flows, so that, at a moment when the timer expires, transmission of a data packet in at least one of all the to-be-switched data flows has been completed, or a task corresponding to at least one of all the to-be-switched data flows has been completed. A data packet of the task corresponding to the data flow belongs to the data flow.

The information about the timer is used to determine timing duration of the timer. Timing of the timer may be performed in a unit of hour, minute, or second, or may be performed in a unit of a time unit, for example, a slot (slot), a mini-slot, or a symbol (symbol). This is not limited in this embodiment of this application. The timer may start timing from a minimum value, or may start timing from a maximum value. For example, if the timer starts timing from 0 to the maximum value (max=10), it indicates that the timer expires. Alternatively, if the timer starts timing from the maximum value (max=10) to 0, it indicates that the timer expires.

Optionally, if the source NCCF node determines the data flow #1, the first switching ACK information further includes identification information of a second data flow. The identification information of the second data flow may be one or more of the following corresponding to the second data flow: a QFI list, an N3*QoS flow identifier, or an IP list. For example, if the first switching request information does not include the identification information of the first data flow, the second data flow is equivalent to the data flow #1, that is, the second data flow may include all or a part of data flows transmitted between the source NCCF node and the UE. For another example, if the first switching request information includes the identification information of the first data flow, and the data flow #1 includes all or a part of data flows in the first data flow, the second data flow is equivalent to the data flow #1. For another example, if the first switching request information includes the identification information of the first data flow, and the data flow #1 includes the first data flow and a data flow associated with at least one data flow in the first data flow, the second data flow may include the data flow associated with the at least one data flow in the first data flow, or the second data flow is equivalent to the data flow #1.

A manner in which the source NCCF node sends the first switching ACK information or the switching indication packet to the RAN is not limited in this embodiment of this application.

In a possible implementation, if the RAN sends the first switching request information to the source NCCF node through the CMF, the source NCCF node sends the first switching ACK information or the switching indication packet to the RAN through the CMF. For example, the source NCCF node sends the first switching ACK information or the switching indication packet to the CMF, so that the CMF sends the first switching ACK information or the switching indication packet to the RAN.

In a possible implementation, if the RAN directly sends the first switching request information to the source NCCF node, the source NCCF node directly sends the first switching request information or the switching indication packet to the RAN. For example, the source NCCF node directly sends the first switching request information or the switching indication packet to the RAN by using a user plane control protocol.

The following describes the steps included in the manner 2.

S407: The RAN sends first switching request information to the UE.

Correspondingly, the UE receives the first switching request information from the RAN.

For more descriptions of the first switching request information, refer to S403.

A manner in which the RAN sends the first switching request information to the UE is not limited in this embodiment of this application.

In a possible implementation, the RAN sends the first switching request information to the UE through the CMF. For example, the RAN sends the first switching request information to the CMF, so that the CMF sends the first switching request information to the UE.

In a possible implementation, the RAN directly sends the first switching request information to the UE. For example, the RAN directly sends the first switching request information to the UE by using an air interface bearer between the RAN and the UE.

Optionally, the manner 2 further includes S408.

S408: The UE interacts with the source NCCF node to freeze data.

For example, after the UE receives the first switching request information from the RAN, if the UE still has an uplink data packet to be sent to the source NCCF node, or one or more tasks performed between the UE and the source NCCF node have not been completed, the UE may interact with the source NCCF node to freeze application layer data interaction (for example, the UE stops sending an instruction flow for which uplink rendering is performed to the source NCCF node, and the source NCCF node stops sending a video flow for which downlink rendering is completed to the UE).

For example, the UE sends information #4 to the source NCCF node, where the information #4 is used to request or indicates the source NCCF node to freeze application layer data interaction between the UE and the source NCCF node.

Optionally, if the first switching request information includes the identification information of the first data flow, the UE interacts with the source NCCF node to freeze application layer data interaction corresponding to the first data flow.

Optionally, after receiving the first switching request information, the UE may determine a data flow #2, so that the UE interacts with the source NCCF node to freeze application layer data interaction corresponding to the data flow #2. The data flow #2 is a to-be-switched data flow determined by the UE.

The data flow #2 determined by the UE may include all or a part of data flows transmitted between the source NCCF node and the UE. For example, the data flow #2 may include a delay-sensitive data flow in all the data flows transmitted between the UE and the source NCCF node. For another example, if the first switching request information includes the identification information of the first data flow, the data flow #2 may include all or a part of data flows in the first data flow. For another example, if the first switching request information includes the identification information of the first data flow, the data flow #2 may include the first data flow and a data flow associated with at least one data flow in the first data flow.

Optionally, if the first switching request information includes information about the target NCCF node, in S408, the UE may further send the information about the target NCCF node to the source NCCF node.

Optionally, the UE may further send the identification information of the first data flow or identification information of a data flow #2 to the source NCCF node. The identification information of the data flow #2 may be one or more of the following corresponding to the data flow #2: a QFI list, an N3*QoS flow identifier, or an IP list.

S409: The UE sends first switching ACK information or a switching indication packet to the RAN.

Correspondingly, the RAN receives the first switching ACK information or the switching indication packet from the UE.

For more descriptions of the first switching ACK information and the switching indication packet, refer to S406.

In a possible implementation, after the UE receives the first switching request information from the RAN, if the UE determines that an NCCF node can be switched, the UE sends the first switching ACK information or the switching indication packet to the RAN. For example, if S408 is performed in the method 400, or the UE has no uplink data packet to be sent to the source NCCF node, or one or more tasks performed between the source NCCF node and the UE have been completed, the UE determines that the NCCF node can be switched.

In a possible implementation, after receiving the first switching request information from the RAN, the UE may immediately send the first switching ACK information to the RAN, or may send the first switching ACK information to the RAN when it is not determined that the NCCF node can be switched. In this implementation, the first switching request information may include information about a timer and/or a target packet sequence number, to indicate the RAN to switch from the first interface to the second interface to transmit the uplink data packet from the UE when the timer expires and/or a target data packet is received. The target data packet includes the target packet sequence number, the first interface is an interface between the source NCCF node and the RAN, and the second interface is an interface between the target NCCF node and the RAN.

The UE may determine the information about the timer based on transmission statuses of all the to-be-switched data flows, so that at a moment when the timer expires, transmission of a data packet in at least one of all the to-be-switched data flows has been completed, or a task corresponding to at least one of all the to-be-switched data flows has been completed. For more descriptions of the information about the timer, refer to S406. All the to-be-switched data flows are the first data flow, or the data flow #2 determined by the UE. For descriptions of the data flow #2, refer to S408.

The target packet sequence number is a packet sequence number that is determined by the UE and that is of an NCCF node that is allowed to be switched. The UE may determine the target packet sequence number based on the transmission statuses of all the to-be-switched data flows. The target packet sequence number may include one or more packet sequence numbers. For example, the target packet sequence number may include one packet sequence number, and the packet sequence number is a sequence number of an initial packet of a task #a corresponding to a data flow #a. The data flow #a is any data flow in all the to-be-switched data flows, or is a data flow that is in all the to-be-switched data flows and that is first transmitted after the UE sends the first switching ACK information. The task #a is any task corresponding to the data flow #a, or is a task that is in tasks corresponding to the data flow #a and that is first started after the UE sends the first switching ACK information. For another example, the target packet sequence number includes one or more packet sequence numbers, and the one or more packet sequence numbers are in one-to-one correspondence with one or more data flows included in all the to-be-switched data flows. A packet sequence number #A included in the target packet sequence number is used as an example. The packet sequence number #A corresponds to a data flow #A in all the to-be-switched data flows. The packet sequence number #A is a sequence number of an initial packet of a task #A corresponding to the data flow #A. The task #A is any task corresponding to the data flow #A, or a service #A is a task that is in tasks corresponding to the data flow #A and that is first started after the UE sends the first switching ACK information.

For example, the target packet sequence number is a PDU packet number. In other words, when the target data packet includes the target packet sequence number, the target packet sequence number is carried at a PDU layer of the target data packet.

Optionally, if the UE determines the data flow #2, the first switching ACK information further includes identification information of a second data flow. The identification information of the second data flow may be one or more of the following corresponding to the second data flow: a QFI list, an N3*QoS flow identifier, or an IP list. For example, if the first switching request information does not include the identification information of the first data flow, the second data flow is equivalent to the data flow #2, that is, the second data flow may include all or a part of data flows transmitted between the source NCCF node and the UE. For another example, if the first switching request information includes the identification information of the first data flow, and the data flow #2 includes all or a part of data flows in the first data flow, the second data flow is equivalent to the data flow #2. For another example, if the first switching request information includes the identification information of the first data flow, and the data flow #2 includes the first data flow and a data flow associated with at least one data flow in the first data flow, the second data flow may include the data flow associated with the at least one data flow in the first data flow, or the second data flow is equivalent to the data flow #2.

A manner in which the UE sends the first switching ACK information or the switching indication packet to the RAN is not limited in this embodiment of this application.

In a possible implementation, if the RAN sends the first switching request information to the UE through the CMF, the UE sends the first switching ACK information or the switching indication packet to the RAN through the CMF. For example, the UE sends the first switching ACK information or the switching indication packet to the CMF, so that the CMF sends the first switching ACK information or the switching indication packet to the RAN.

In a possible implementation, if the RAN directly sends the first switching request information to the UE, the UE directly sends the first switching request information or the switching indication packet to the RAN. For example, the UE directly sends the first switching request information or the switching indication packet to the RAN by using an air interface bearer between the UE and the RAN.

Optionally, the manner 2 further includes S410.

S410: The RAN sends a switching command to the source NCCF node.

Correspondingly, the source NCCF node receives the switching command from the RAN.

The switching command includes identification information of a fourth data flow and/or the information about the target NCCF node. The fourth data flow is a to-be-switched data flow, and the identification information of the fourth data flow may be one or more of the following corresponding to the fourth data flow: a QFI list, an N3*QoS flow identifier, or an IP list. If the fourth data flow is equivalent to the first data flow, or the first switching ACK information received by the RAN includes the identification information of the second data flow, the fourth data flow is equivalent to the second data flow, or is equivalent to the first data flow and the second data flow. For example, if the second data flow includes the first data flow and a data flow associated with at least one data flow in the first data flow, the fourth data flow is equivalent to the second data flow. For another example, if the second data flow includes a data flow associated with at least one data flow in the first data flow, the fourth data flow is equivalent to the first data flow and the second data flow, that is, the fourth data flow includes the first data flow and the data flow associated with the at least one data flow in the first data flow.

For example, if the first switching request information sent by the RAN to the UE does not include the information about the target NCCF node, the switching command sent by the RAN to the source NCCF node includes the information about the target NCCF node.

For another example, if all the to-be-switched data flows are not all data flows transmitted between the UE and the source NCCF node, the switching command sent by the RAN to the source NCCF node includes the identification information of the fourth data flow.

Optionally, the manner 2 further includes S411.

S411: The source NCCF node sends a context of the to-be-switched data flow to the target NCCF node.

Correspondingly, the target NCCF node receives the context of the to-be-switched data flow from the source NCCF node.

The context of the to-be-switched data flow may include one or more of the following: an application layer checkpoint, data that is related to the to-be-switched data flow and that is buffered by the source NCCF node, or a protocol stack status between the source NCCF node and the UE.

For example, if application layer service continuity needs to be maintained, the source NCCF node may send the context of the switched data flow to the target NCCF node.

Optionally, the context that is of the to-be-switched data flow and that is sent by the source NCCF node to the target NCCF node includes contexts of all to-be-switched data flows, or includes a context of a data flow that needs to maintain application layer service continuity in all the to-be-switched data flows.

If the source NCCF node does not receive the identification information of the first data flow or the identification information of the data flow #2 from the UE, all the to-be-switched data flows are all data flows transmitted between the source NCCF node and the UE. If the source NCCF node receives the identification information of the first data flow from the UE, all the to-be-switched data flows are the first data flow. If the source NCCF node receives the identification information of the data flow #2 from the UE, all the to-be-switched data flows are the data flow #2. If the switching command received by the source NCCF node includes the identification information of the fourth data flow, all the to-be-switched data flows are the fourth data flow.

For a manner in which the RAN sends the switching command to the source NCCF node, refer to the manner in which the RAN sends the first switching request information to the source NCCF node in S403.

Optionally, the manner 2 further includes S412.

S412: The source NCCF node sends switching completion information to the RAN.

Correspondingly, the RAN receives the switching completion information from the source NCCF node.

If the RAN sends the switching command to the source NCCF node, and the source NCCF node sends the context of the to-be-switched data flow to the target NCCF node based on the switching command, the source NCCF node may send the switching completion information to the RAN.

Optionally, the switching completion information includes identification information of a fifth data flow. The identification information of the fifth data flow may be one or more of the following corresponding to the fifth data flow: a QFI list, an N3*QoS flow identifier, or an IP list. In S412, the source NCCF node sends a context of the fifth data flow to the target NCCF node.

The switching completion information may alternatively be a switching completion message. This is not limited in this embodiment of this application.

S413: The RAN determines to switch from the first interface to the second interface to transmit the uplink data packet from the UE.

S414: The UE sends the uplink data packet to the RAN.

Correspondingly, the RAN receives the uplink data packet from the UE.

S415: The RAN sends the uplink data packet to the target NCCF node.

Correspondingly, the target NCCF node receives the uplink data packet from the RAN.

In a possible implementation, if the RAN receives the switching indication packet from the source NCCF node or the UE, the RAN determines to switch from the first interface to the second interface to transmit the uplink data packet from the UE. Further, after the RAN node receives the switching indication packet from the source NCCF node or the UE, if the RAN receives the uplink data packet from the UE, the RAN sends the uplink data packet from the UE to the target NCCF node through the second interface.

In a possible implementation, if the RAN receives the first switching ACK information from the source NCCF node or the UE, the RAN determines to switch from the first interface to the second interface to transmit the uplink data packet from the UE. Further, after the RAN node receives the first switching ACK information from the source NCCF node or the UE, if the RAN receives the uplink data packet from the UE, the RAN sends the uplink data packet from the UE to the target NCCF node through the second interface.

In a possible implementation, if the RAN receives the first switching ACK information from the source NCCF node or the UE, and the first switching ACK information includes information about a timer, the RAN determines, based on the information about the timer, to switch from the first interface to the second interface to transmit the uplink data packet from the UE after the timer expires. Further, after the timer expires, if the RAN receives the uplink data packet from the UE, the RAN sends the uplink data packet from the UE to the target NCCF node through the second interface.

In a possible implementation, if the RAN receives the first switching ACK information from the UE, and the first switching ACK information includes a target packet sequence number, the RAN determines, based on the target packet sequence number, to switch from the first interface to the second interface to transmit the uplink data packet from the UE when a target data packet is received. Further, the RAN sends the target data packet to the target NCCF node through the second interface, and sends, to the target NCCF node through the second interface, the uplink data packet received from the UE after the target data packet.

For example, if the target packet sequence number includes one packet sequence number, the RAN determines, based on the target packet sequence number, to switch all the to-be-switched data flows to the target NCCF node when the target data packet is received. That is, the RAN sends, to the target NCCF node through the second interface, the target data packet and all uplink data packets received from the UE after the target data packet.

For example, the target packet sequence number includes one or more packet sequence numbers, and the one or more packet sequence numbers correspond to one or more data flows included in all the to-be-switched data flows. A packet sequence number #A in the one or more packet sequence numbers is used as an example. The packet sequence number #A corresponds to a data flow #A in all the to-be-switched data flows. The RAN may determine, based on a packet sequence number #1, to switch the data flow #A to the target NCCF node when a target data packet #A is received. That is, the RAN sends, to the target NCCF node through the second interface, the target data packet #A and a data packet #A received from the UE after the target data packet #A. The target data packet #A includes the packet sequence number #A, and the data packet #A is a data packet in the data flow #A. It may be understood that, when the RAN receives the target data packet #A, if the RAN receives a data packet #B from the UE after the target data packet #A, but the RAN does not receive a target data packet #B, the RAN does not send the data packet #B to the target NCCF node, but sends the data packet #B to the source NCCF node through the first interface. The target data packet #B includes a packet sequence number #B, the packet sequence number #B corresponds to a data flow #B in all the to-be-switched data flows, and a data packet #B is a data packet in the data flow #B.

It may be understood that, when the RAN determines to switch from the first interface to the second interface to transmit the uplink data packet from the UE, the RAN may update a mapping relationship between a data radio bearer (data radio bearer, DRB) and an NCCF node. That is, the RAN updates a mapping relationship between a first DRB between the UE and the RAN and the source NCCF node to a mapping relationship between the first DRB and the target NCCF node. The mapping relationship between the DRB and the NCCF node may also be referred to as a mapping relationship between a DRB and N3*.

Optionally, after receiving the uplink data packet from the UE through the RAN, the target NCCF node may send a downlink data packet to the UE through the RAN, that is, the target NCCF node sends the downlink data packet to the RAN, so that the RAN sends, to the UE, the downlink data packet received from the target NCCF node.

In this embodiment of this application, the RAN may trigger the switching of the NCCF node. Compared with a manner in which a control plane network element triggers switching of an NCCF node, this embodiment of this application can reduce some signaling interactions, so that a user plane path switching delay can be reduced, and end-to-end service experience can be improved.

For example, the manner in which the control plane network element triggers the switching of the NCCF node may include the following interaction procedures: an interaction procedure between the control plane network element and the source NCCF node, an interaction procedure between the control plane network element and the target NCCF node, and an interaction procedure between the control plane network element and the access network device. In this embodiment of this application, the manner in which the RAN triggers the switching of the NCCF node may include an interaction procedure between the RAN and the source NCCF node, or an interaction procedure between the RAN and the UE. Compared with the manner in which the control plane network element triggers the switching of the NCCF node, this manner reduces some signaling interactions.

In addition, the RAN may determine, based on the first switching ACK information or the switching indication packet from the source NCCF node or the UE, to switch from the first interface to the second interface to transmit the uplink data packet from the UE, so as to avoid service interruption of the UE caused because the RAN blindly switches from the first interface to the second interface to transmit the uplink data packet from the UE when the RAN cannot identify a data packet transmitted between the UE and the source NCCF node, thereby helping ensure service experience of the UE.

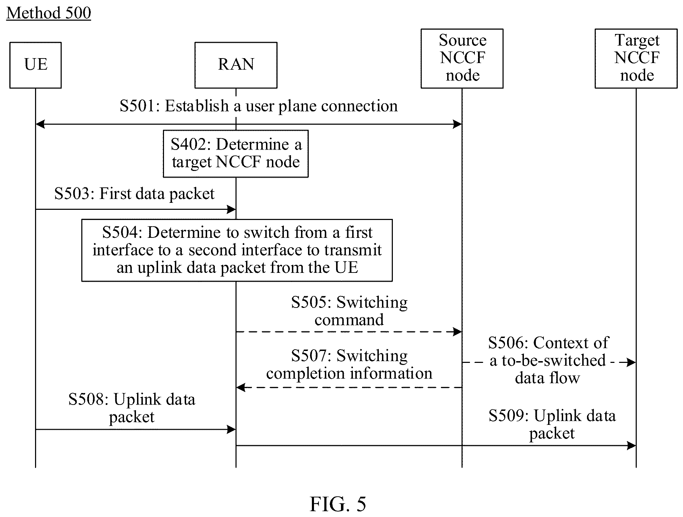

FIG. 5 is a schematic flowchart of a method 500 according to an embodiment of this application. As shown in FIG. 5, the method 500 may include the following steps.

S501: UE establishes a user plane connection to a source NCCF node.

For more descriptions of S501, refer to S401 in the foregoing method 400.

S502: The RAN determines a target NCCF node.

For S502, refer to S310a in the foregoing method 300.

It should be noted that, in this embodiment of this application, an example in which S502 is performed in the method 500 is used for description. In a possible implementation, S502 may be replaced with S320b in the foregoing method 300, that is, the RAN may receive information about the target NCCF node from a CMF.

S503: The UE sends a first data packet to the RAN.

Correspondingly, the RAN receives the first data packet from the UE.

The first data packet includes packet indication information, and the packet indication information indicates whether the first data packet is an initial packet of a first task, or indicates whether the first data packet is a first tail packet of the first task, or indicates whether there is a data packet of the first task after the first data packet. For descriptions of the first task, refer to the foregoing method 300.

For example, the packet indication information may be carried in a header of a service data adaptation protocol (service data adaptation protocol, SDAP) layer of the first data packet. The SDAP layer is a protocol layer between the UE and the RAN, and may carry some information such as QoS control. For example, the SDAP layer may carry a QFI. The SDAP layer of the first data packet may also be referred to as an SDAP* layer. The SDAP* layer may carry an information element (information element, IE) of the SDAP layer defined in an existing protocol. In addition, the SDAP* layer may further carry the packet indication information.

For example, the packet indication information may be carried in a header of a PDU layer of the first data packet or a fixed location of a packet payload (payload) (for example, the first eight bits of the packet payload) of the PDU layer. The header of the PDU layer may carry some information used to assist transmission of a mobile communication network, for example, QoS-related information, congestion-related information, and upper-layer protocol-related information.

The packet indication information is not limited in this embodiment of this application. For example, the packet indication information includes data length (data length) information and offset (offset) information, or includes data length information and position (position) information. The data length information indicates a length of a data block corresponding to the first task, the offset information or the position information indicates a position of the first data packet in the data block corresponding to the first task, the data block corresponding to the first task includes at least one data packet, and the data block corresponding to the first task includes the first data packet. For example, if the data length information is 10, it indicates that the data block corresponding to the first task includes 10 data packets; and if the offset information or the position information is 1, it indicates that the first data packet is the initial packet of the first task; or if the offset information or the position information is 10, it indicates that the first data packet is the tail packet of the first task.

S504: The RAN determines to switch from a first interface to a second interface to transmit an uplink data packet from the UE.

In a possible implementation, if the RAN determines, based on the packet indication information included in the first data packet, that the first data packet is the initial packet of the first task, the RAN determines to switch from the first interface to the second interface to transmit the uplink data packet from the UE.

For example, if the packet indication information is carried at the SDAP layer of the first data packet, the RAN may determine, based on the packet indication information, that the first data packet is an initial packet of an upper-layer protocol of the SDAP (for example, an initial packet of a transmission control protocol (transmission control protocol, TCP) or an initial packet of a hypertext transfer protocol (hyper text transfer protocol, HTTP) protocol). For another example, the RAN may determine, based on the packet indication information, that the first data packet is an initial packet of an application layer service transaction corresponding to the first task (for example, an initial packet of uplink HTTP get (get) of a download service). For another example, the RAN may determine, based on the packet indication information, that the first data packet is an initial packet of an uplink data block or a computing task message corresponding to the first task.

In a possible implementation, if the RAN determines, based on the packet indication information included in the first data packet, that the first data packet is the tail packet of the first task, the RAN determines to switch from the first interface to the second interface to transmit the uplink data packet from the UE when a second data packet is received from the UE. The second data packet is an uplink data packet received by the RAN from the UE after the first data packet. The second data packet may be a data packet of a second task, the second task is a task performed after the first task, and the second task and the first task belong to a same application or service, or the second task and the first task belong to different applications or services.

Optionally, before the RAN determines, based on the packet indication information included in the first data packet, that the first data packet is the initial packet or the tail packet of the first task, the RAN determines whether a data flow in which the first data packet is located belongs to a to-be-switched first data flow. If the data flow in which the first data packet is located belongs to the to-be-switched first data flow, the RAN determines, based on the packet indication information included in the first data packet, whether the first data packet is the initial packet or the tail packet of the first task. If the data flow in which the first data packet is located does not belong to the to-be-switched first data flow, the RAN determines not to switch from the first interface to the second interface, that is, the RAN still transmits the uplink data packet from the UE through the first interface. For descriptions of the first data flow, refer to S403 in the foregoing method 400.

Optionally, the RAN determines, based on the packet indication information included in the first data packet, to switch from the first interface to the second interface to transmit an uplink data packet that is from the UE and that belongs to a same data flow as the first data packet. In other words, the RAN switches from the first interface to the second interface for the data flow in which the first data packet is located, that is, the RAN sends, to the target NCCF node through the second interface, the first data packet and an uplink data packet that is received from the UE after the first data packet and that belongs to the same data flow as the first data packet. Alternatively, the RAN determines, based on the packet indication information included in the first data packet, to switch from the first interface to the second interface to transmit an uplink data packet that is from the UE and that belongs to the first data flow. In other words, the RAN switches from the first interface to the second interface for the to-be-switched first data flow, that is, the RAN sends, to the target NCCF node through the second interface, the first data packet and an uplink data packet that is in the first data flow and that is received from the UE after the first data packet.

Optionally, the method 500 further includes S505.

S505: The RAN sends a switching command to the source NCCF node.

Correspondingly, the source NCCF node receives the switching command from the RAN.

The switching command includes identification information of a fourth data flow and/or the information about the target NCCF node. The fourth data flow is a to-be-switched data flow, and the identification information of the fourth data flow may be one or more of the following corresponding to the fourth data flow: a QFI list, an N3*QoS flow identifier, or an IP list. The fourth data flow is equivalent to the first data flow, or the fourth data flow is the data flow in which the first data packet is located. For example, if the RAN determines to switch from the first interface to the second interface for the data flow in which the first data packet is located, the fourth data flow is the data flow in which the first data packet is located. For another example, if the RAN determines to switch from the first interface to the second interface for the first data flow, the fourth data flow is equivalent to the first data flow.

For descriptions of the information about the target NCCF node, refer to S403 in the foregoing method 400.

Optionally, the method 500 further includes S506.

S506: The source NCCF node sends a context of the to-be-switched data flow to the target NCCF node.

Correspondingly, the target NCCF node receives the context of the to-be-switched data flow from the source NCCF node.

The context of the to-be-switched data flow may include one or more of the following: an application layer checkpoint, data that is related to the to-be-switched data flow and that is buffered by the source NCCF node, or a protocol stack status between the source NCCF node and the UE.

For example, if application layer service continuity needs to be maintained, the source NCCF node may send the context of the switched data flow to the target NCCF node.

Optionally, the context that is of the to-be-switched data flow and that is sent by the source NCCF node to the target NCCF node includes a context of the first data flow, or includes a context of a data flow that needs to maintain application layer service continuity in the first data flow.

For a manner in which the RAN sends the switching command to the source NCCF node, refer to the manner in which the RAN sends the first switching request information to the source NCCF node in S403.

Optionally, the method 500 further includes S507.

S507: The source NCCF node sends switching completion information to the RAN.

Correspondingly, the RAN receives the switching completion information from the source NCCF node. The switching completion information may also be referred to as a switching completion message.

For S507, refer to S412 in the foregoing method 400.

S508: The UE sends the uplink data packet to the RAN.

Correspondingly, the RAN receives the uplink data packet from the UE.

S509: The RAN sends the uplink data packet to the target NCCF node.

Correspondingly, the target NCCF node receives the uplink data packet from the RAN.

In a possible implementation, if the RAN determines, based on the packet indication information included in the first data packet, that the first data packet is the initial packet of the first task, the uplink data packet sent by the RAN to the target NCCF node through the second interface is the first data packet, and the second data packet received by the RAN from the UE after the first data packet.

In a possible implementation, if the RAN determines, based on the packet indication information included in the first data packet, that the first data packet is the tail packet of the first task, the uplink data packet sent by the RAN to the target NCCF node through the second interface is the second data packet received by the RAN after the first data packet.

Optionally, if the RAN determines to switch from the first interface to the second interface for the data flow in which the first data packet is located, when the second data packet and the first data packet belong to a same data flow, the RAN sends, to the target NCCF node through the second interface, the second data packet received from the UE after the first data packet. If the second data packet and the first data packet do not belong to uplink data packets of a same data flow, the RAN sends the second data packet to the source NCCF node through the first interface.

Optionally, if the RAN determines to switch from the first interface to the second interface for the first data flow, when a data flow in which the second data packet is located belongs to the first data flow, the RAN sends, to the target NCCF node through the second interface, the second data packet received from the UE after the first data packet. If the data flow in which the second data packet is located does not belong to the first data flow, the RAN sends the second data packet to the source NCCF node through the first interface.

Optionally, after receiving the uplink data packet from the UE through the RAN, the target NCCF node may send a downlink data packet to the UE through the RAN, that is, the target NCCF sends the downlink data packet to the RAN, so that the RAN sends, to the UE, the downlink data packet received from the target NCCF node.

In this embodiment of this application, the RAN may trigger the switching of the NCCF node. Compared with a manner in which a control plane network element triggers switching of an NCCF node, this embodiment of this application can reduce some signaling interactions, so that a user plane path switching delay can be reduced, and end-to-end service experience can be improved.

For example, the manner in which the control plane network element triggers the switching of the NCCF node may include the following interaction procedures: an interaction procedure between the control plane network element and the source NCCF node, an interaction procedure between the control plane network element and the target NCCF node, and an interaction procedure between the control plane network element and the access network device. In this embodiment of this application, the RAN may trigger the switching of the NCCF node based on information in a normally transmitted data packet, without requiring an additional interaction procedure. Compared with the manner in which the control plane network element triggers the switching of the NCCF node, this embodiment of this application reduces some signaling interactions.

In addition, the RAN may identify a data packet from the UE based on packet indication information in the data packet from the UE, so that the RAN can independently determine when to send the data packet from the UE to the target NCCF node, without interacting with another node. This avoids service interruption of the UE caused because the RAN blindly switches from the first interface to the second interface to transmit the uplink data packet from the UE when the RAN cannot identify a data packet transmitted between the UE and the source NCCF node, thereby helping ensure service experience of the UE.

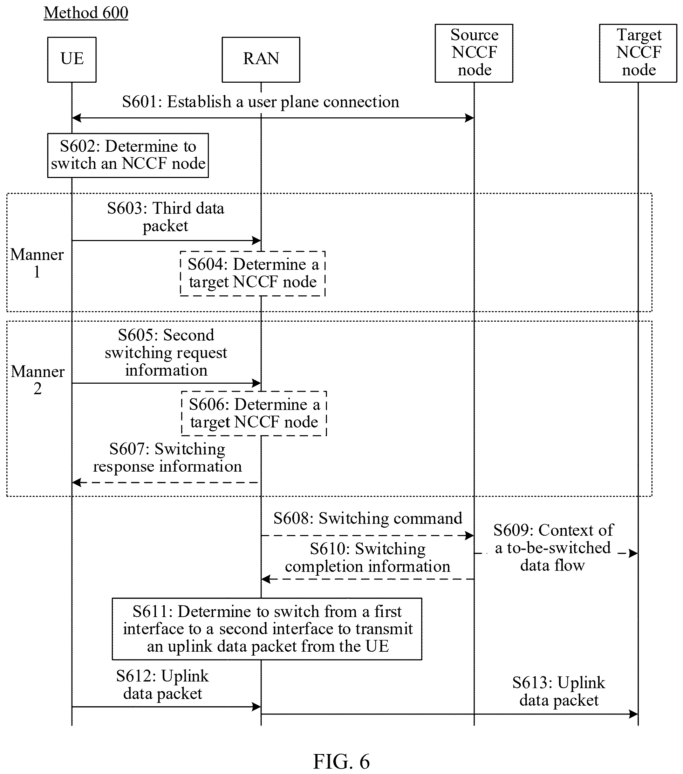

FIG. 6 is a schematic flowchart of a method 600 according to an embodiment of this application. As shown in FIG. 6, the method 600 may include the following steps.

S601: UE establishes a user plane connection to a source NCCF node.

For more descriptions of S601, refer to S401 in the foregoing method 400.

S602: The UE determines to switch an NCCF node.

For example, the UE determines to switch the NCCF node when a first condition is met. The first condition includes one or more of the following: a processing capability of the source NCCF node is lower than a processing capability threshold, or quality of communication between the source NCCF node and the terminal device is lower than a communication quality threshold #1. For more descriptions of the first condition, refer to S310a in S300.

For a manner in which the UE determines that the processing capability of the source NCCF node is lower than the processing capability threshold, refer to the manner in which the RAN determines that the processing capability of the source NCCF node is lower than the processing capability threshold described in S310a of the foregoing method 300. For a manner in which the UE determines that the quality of communication between the source NCCF node and the terminal device is lower than the communication quality threshold #1, refer to the manner in which the RAN determines that the quality of communication between the source NCCF node and the terminal device is lower than the communication quality threshold #1 described in S310a of the foregoing method 300.

Optionally, in S602, the UE may further determine a target NCCF node. For a manner in which the UE determines the target NCCF node, refer to the manner in which the RAN determines the target NCCF node described in S310a in the foregoing method 300.

Further, steps in a manner 1 or steps in a manner 2 continue to be performed in the method 600.

The following describes the steps included in the manner 1.

S603: The UE sends a third data packet to the RAN.

Correspondingly, the RAN receives the third data packet from the UE.

The third data packet includes switching indication information. For example, the switching indication information is carried at an SDAP layer or a PDU layer of the third data packet.

The switching indication information is not limited in this embodiment of this application.

For example, the switching indication information is 1-bit (bit) information, and a value of the switching indication information is "1" or "0".

For example, if the UE determines the target NCCF node, the switching indication information may be information about the target NCCF node. For descriptions of the information about the target NCCF node, refer to S403 in the foregoing method 400.

For example, the switching indication information may alternatively be identification information of a third data flow, and the third data flow is a to-be-switched data flow. The identification information of the third data flow may include one or more of the following corresponding to the third data flow: a QFI list, an N3*QoS flow identifier, or an IP list. For descriptions of the third data flow, refer to the descriptions of the first data flow in S403 in the foregoing method 400.

For example, the switching indication information may include a plurality of the foregoing pieces of information. For example, the switching indication information may include the 1-bit information and the information about the target NCCF node, or the switching indication information may include the information about the target NCCF node and the identification information of the third data flow.

Optionally, the manner 1 further includes S604.

S604: The RAN determines the target NCCF node.

If the switching indication information included in the third data packet does not include the information about the target NCCF node, after receiving the third data packet, the RAN may determine the target NCCF node. For a manner in which the RAN determines the target NCCF node, refer to S310a in the foregoing method 300.

The following describes the steps included in the manner 2.

S605: The UE sends second switching request information to the RAN.

Correspondingly, the RAN receives the second switching request information from the UE.

The second switching request information may also be referred to as N3* switching request information or NCCF node switching request information. This is not limited in this embodiment of this application. The second switching request information may also be referred to as a second switching request message.

Optionally, the second switching request information may be session modification information.

Optionally, the second switching request information includes identification information of a third data flow and/or information about the target NCCF node.

For a manner in which the UE sends the second switching request information to the RAN, refer to the manner in which the UE sends the first switching ACK information or the switching indication packet to the RAN in S409 in the foregoing method 400.

Optionally, the manner 2 further includes S606.

S606: The RAN determines the target NCCF node.

If the second switching request information does not include the information about the target NCCF node, after receiving the second switching request information, the RAN may determine the target NCCF node. For a manner in which the RAN determines the target NCCF node, refer to S310a in the foregoing method 300.

Optionally, the manner 2 further includes S607.

S607: The RAN sends switching response information to the UE.

Correspondingly, the UE receives the switching response information from the RAN. The switching response information may also be referred to as a switching response message.

For a manner in which the RAN sends the switching response information to the UE, refer to the manner in which the RAN sends the first switching request information to the UE in S407 in the foregoing method 400.

Optionally, before the UE receives the switching response information from the RAN, the UE suspends sending of a data packet corresponding to a data flow that is requested to be switched. The data flow that the UE requests to be switched is a data flow that the UE requests to be switched from a first interface to a second interface. Using a data flow #x as an example, a transmission path of the data flow #x is: UE→RAN→source NCCF node. If the data flow that the UE requests to be switched is the data flow #x, it indicates that the UE requests to switch the transmission path of the data flow #x to: UE→RAN→target NCCF node.

Optionally, the method 600 further includes S608.

S608: The RAN sends a switching command to the source NCCF node.

Correspondingly, the source NCCF node receives the switching command from the RAN.

The switching command includes identification information of a fourth data flow and/or the information about the target NCCF node. The fourth data flow is a to-be-switched data flow, and the identification information of the fourth data flow may be one or more of the following corresponding to the fourth data flow: a QFI list, an N3*QoS flow identifier, or an IP list. The fourth data flow is equivalent to the third data flow, or when the switching indication information or the second switching request information received by the RAN does not include the identification information of the third data flow, the fourth data flow is equivalent to the first data flow. For descriptions of the first data flow, refer to S403 in the foregoing method 400.

Optionally, the method 600 further includes S609.

S609: The source NCCF node sends a context of the to-be-switched data flow to the target NCCF node.

Correspondingly, the target NCCF node receives the context of the to-be-switched data flow from the source NCCF node.

The context of the to-be-switched data flow may include one or more of the following: an application layer checkpoint, data that is related to the to-be-switched data flow and that is buffered by the source NCCF node, or a protocol stack status between the source NCCF node and the UE.

For example, if application layer service continuity needs to be maintained, the source NCCF node may send the context of the switched data flow to the target NCCF node.

Optionally, the context that is of the to-be-switched data flow and that is sent by the source NCCF node to the target NCCF node includes a context of the fourth data flow, or includes a context of a data flow that needs to maintain application layer service continuity in the fourth data flow.

For a manner in which the RAN sends the switching command to the source NCCF node, refer to the manner in which the RAN sends the first switching request information to the source NCCF node in S403.

Optionally, the method 600 further includes S610.

S610: The source NCCF node sends switching completion information to the RAN.

Correspondingly, the RAN receives the switching completion information from the source NCCF node. The switching completion information may also be referred to as a switching completion message.

For S610, refer to S412 in the foregoing method 400.

S611: The RAN determines to switch from a first interface to a second interface to transmit an uplink data packet from the UE.

S612: The UE sends the uplink data packet to the RAN.

Correspondingly, the RAN receives the uplink data packet from the UE.

S613: The RAN sends the uplink data packet to the target NCCF node.

Correspondingly, the target NCCF node receives the uplink data packet from the RAN.

In a possible implementation, if the RAN receives the switching indication information included in the third data packet from the UE, the RAN determines to switch from the first interface to the second interface to transmit the uplink data packet from the UE. Further, the RAN sends the third data packet to the target NCCF node through the second interface.

Optionally, the RAN sends, to the target NCCF node through the second interface, the uplink data packet received from the UE after the third data packet.

Optionally, the RAN sends, to the target NCCF node through the second interface, an uplink data packet that is received from the UE after the third data packet and that belongs to a same data flow as the third data packet.

Optionally, if the switching indication information includes the identification information of the third data flow, the RAN sends, to the target NCCF node through the second interface, an uplink data packet that corresponds to the third data flow and that is received from the UE after the third data packet.

In a possible implementation, if the RAN receives the second switching request information from the UE, the RAN determines to switch from the first interface to the second interface to transmit the uplink data packet from the UE. Further, the RAN sends, to the target NCCF node through the second interface, the uplink data packet received from the UE after the second switching request information.

Optionally, if the second switching request information includes the identification information of the third data flow, the RAN sends, to the target NCCF node through the second interface, an uplink data packet that is in the third data flow and that is received from the UE after the second switching request information.

Optionally, after receiving the uplink data packet from the UE through the RAN, the target NCCF node may send a downlink data packet to the UE through the RAN, that is, the target NCCF sends the downlink data packet to the RAN, so that the RAN sends, to the UE, the downlink data packet received from the target NCCF node.

In this embodiment of this application, the UE may trigger the switching of the NCCF node. Compared with a manner in which a control plane network element triggers switching of an NCCF node, this embodiment of this application can reduce some signaling interactions, so that a user plane path switching delay can be reduced, and end-to-end service experience can be improved.

For example, the manner in which the control plane network element triggers the switching of the NCCF node may include the following interaction procedures: an interaction procedure between the control plane network element and the source NCCF node, an interaction procedure between the control plane network element and the target NCCF node, and an interaction procedure between the control plane network element and the access network device. In this embodiment of this application, the manner in which the UE triggers the switching of the NCCF node may include an interaction procedure between the UE and the source RAN. Compared with the manner in which the control plane network element triggers the switching of the NCCF node, this manner reduces some signaling interactions.

In addition, the RAN may determine, based on the switching indication information or the second switching request information from the UE, to switch from the first interface to the second interface to transmit the uplink data packet from the UE, so as to avoid service interruption of the UE caused because the RAN blindly switches from the first interface to the second interface to transmit the uplink data packet from the UE when the RAN cannot identify a data packet transmitted between the UE and the source NCCF node, thereby helping ensure service experience of the UE.

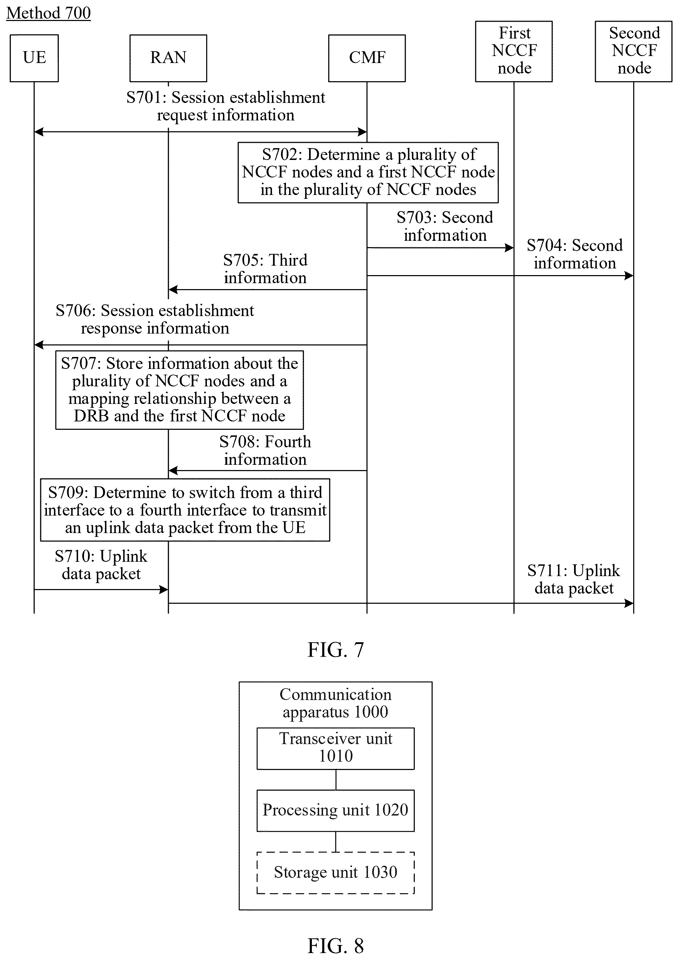

FIG. 7 is a schematic flowchart of a method 700 according to an embodiment of this application. As shown in FIG. 7, the method 700 may include the following steps.

S701: UE sends session establishment request information to a CMF.

Correspondingly, the CMF receives the session establishment request information from the UE. The session establishment request information may also be referred to as a session establishment request message.

Optionally, in S701, the UE sends session modification request information to the CMF. The session modification request information may also be referred to as a session modification request message.

S702: The CMF determines a plurality of NCCF nodes and a first NCCF node in the plurality of NCCF nodes.

After receiving the session establishment request information or the session modification request information from the UE, the CMF selects the plurality of NCCF nodes for a session that the UE requests to establish or a session that the UE requests to modify. Each NCCF node in the plurality of NCCF nodes can provide a service for the UE. The first NCCF node may be any NCCF node in the plurality of NCCF nodes, or the first NCCF node is an NCCF node with a lowest load in the plurality of NCCF nodes, or the first NCCF node is an NCCF node with a highest processing capability in the plurality of NCCF nodes.

S703: The CMF sends second information to the first NCCF node.

Correspondingly, the first NCCF node receives the second information from the CMF.

S704: The CMF sends the second information to a second NCCF node.

Correspondingly, the second NCCF node receives the second information from the CMF. The second NCCF node belongs to the plurality of NCCF nodes.

The second information includes information about a RAN, and the information about the RAN may include one or more of the following: an identifier of the RAN, an IP address of the RAN, or connection information corresponding to the RAN. The connection information corresponding to the RAN includes an IP address and a port number of the RAN.

It should be noted that, in FIG. 7, that the CMF sends the second information to the first NCCF node and the second NCCF node is used as an example. When the plurality of NCCF nodes further include other NCCF nodes different from the first NCCF node and the second NCCF node, the CMF further sends the second information to the other NCCF nodes different from the first NCCF node and the second NCCF node in the plurality of NCCF nodes, that is, the CMF sends the second information to each NCCF node in the plurality of NCCF nodes.

S705: The CMF sends third information to the RAN.

Correspondingly, the RAN receives the third information from the CMF.

The third information includes information about each NCCF node in the plurality of NCCF nodes, and the third information further indicates that the first NCCF node in the plurality of NCCF nodes is configured to provide a service for the UE. In other words, the third information indicates that the first NCCF node in the plurality of NCCF nodes is an active (active) NCCF node. For example, the third information may include a plurality of bits, the plurality of bits are in one-to-one correspondence with the plurality of NCCF nodes, and a bit corresponding to the first NCCF node in the plurality of bits is set to a first value (the first value is 0 or 1), indicating that the first NCCF node is the active NCCF node.

The information about the NCCF node may include one or more of the following: an identifier of the NCCF node, an IP address of the NCCF node, or connection information corresponding to the NCCF node. The connection information corresponding to the NCCF node includes an IP address and a port number of the NCCF node.

S706: The CMF sends session establishment response information to the UE.

Correspondingly, the UE receives the session establishment response information from the CMF. The session establishment response information may also be referred to as a session establishment response message.

The session establishment response information may include connection information corresponding to the first NCCF node.

Optionally, if the UE sends the session modification request information to the CMF in S701, the CMF sends session modification response information to the UE in S706, where the session modification response information includes the connection information corresponding to the first NCCF node. The session modification response information may also be referred to as a session modification response message.

S707: The RAN stores information about the plurality of NCCF nodes and a mapping relationship between a DRB and the first NCCF node.

The DRB is an air interface bearer between the UE and the RAN. Based on the mapping relationship between the DRB and the first NCCF node, if the RAN receives an uplink data packet from the UE through the DRB, the RAN sends the uplink data packet from the UE to the first NCCF node; or if the RAN receives a downlink data packet from the first NCCF node, the RAN sends the downlink data packet from the first NCCF node to the UE through the DRB.

S708: The CMF sends fourth information to the RAN.

Correspondingly, the RAN receives the fourth information from the CMF.

The fourth information is used by the RAN to determine to switch from a third interface to a fourth interface to transmit an uplink data packet from the UE, where the third interface is an interface between the RAN and the first NCCF node, and the fourth interface is an interface between the RAN and the second NCCF node. In other words, the fourth information indicates that the active NCCF node is the second NCCF node.

For example, switching from the third interface to the fourth interface to transmit the uplink data packet from the UE is specifically: updating a mapping relationship #1 to a mapping relationship #2, where the mapping relationship #1 is a mapping relationship between the DRB and the third interface, and the mapping relationship #2 is a mapping relationship between the DRB and the fourth interface.

For example, if the fourth information indicates that the active NCCF node is the second NCCF node, the fourth information is used by the RAN to determine to switch from the third interface to the fourth interface to transmit the uplink data packet from the UE. For example, the fourth information includes information about the second NCCF node, or the fourth information includes a plurality of bits, the plurality of bits are in one-to-one correspondence with the plurality of NCCF nodes, and a bit corresponding to the second NCCF node in the plurality of bits is a first value.

Optionally, the CMF sends the fourth information to the RAN when a first condition is met. The first condition includes one or more of the following: a processing capability of the first NCCF node is lower than a processing capability threshold, or quality of communication between the first NCCF node and the terminal device is lower than a communication quality threshold #1. For more descriptions of the first condition, refer to S310a in S300.

For a manner in which the CMF determines that the processing capability of the first NCCF node is lower than the processing capability threshold, refer to the manner in which the RAN determines that the processing capability of the source NCCF node is lower than the processing capability threshold described in S310a of the foregoing method 300. For a manner in which the CMF determines that the quality of communication between the first NCCF node and the terminal device is lower than the communication quality threshold #1, refer to the manner in which the RAN determines that the quality of communication between the source NCCF node and the terminal device is lower than the communication quality threshold #1 described in S310a of the foregoing method 300.

S709: The RAN determines to switch from the third interface to the fourth interface to transmit the uplink data packet from the UE.

When receiving the fourth information from the CMF, the RAN determines to switch from the third interface to the fourth interface to transmit the uplink data packet from the UE.

Optionally, when the RAN receives the fourth information from the CMF, and receives first information from a first device, the RAN determines, based on the fourth information and the first information, to switch from the third interface to the fourth interface to transmit the uplink data packet from the UE. Specifically, the RAN determines, based on the fourth information, that the active NCCF node is the second NCCF node, and further determines, based on the first information, to switch from the third interface to the fourth interface to transmit the uplink data packet from the UE. In this case, the first interface is equivalent to the third interface, that is, the first NCCF node may be referred to as a source NCCF node, and the second interface is equivalent to the fourth interface, that is, the second NCCF node may be referred to as a target NCCF node.

For example, the first information is first switching ACK information. After receiving the fourth information from the CMF, the RAN may send first switching request information to the first device, so that after receiving the first switching ACK information from the first device, the RAN can determine to switch from the third interface to the fourth interface to transmit the uplink data packet from the UE.

For another example, the first information is packet indication information. After the RAN receives the fourth information from the CMF, if the RAN receives the packet indication information from the first device, and determines, based on the packet indication information, that the first data packet is an initial packet of a first task, the RAN may determine to switch from the third interface to the fourth interface to transmit the uplink data packet from the UE.

For another example, the first information is switching indication information. After the RAN receives the fourth information from the CMF, if the RAN receives the switching indication information from the first device, the RAN may determine to switch from the third interface to the fourth interface to transmit the uplink data packet from the UE.

For another example, the first information is second switching request information. After the RAN receives the fourth information from the CMF, if the RAN receives the second switching request information from the first device, the RAN may determine to switch from the third interface to the fourth interface to transmit the uplink data packet from the UE.

For more descriptions of the first information, refer to the foregoing method 300 to method 600. For a manner in which the RAN determines, based on the first information, to switch from the third interface to the fourth interface to transmit the uplink data packet from the UE, refer to the manner in which the RAN switches from the first interface to the second interface to transmit the uplink data packet from the UE based on the first information described in the foregoing method 300 to method 600.

It may be understood that, when the RAN determines to switch from the third interface to the fourth interface to transmit the uplink data packet from the UE, the RAN may update a mapping relationship between a DRB and an NCCF node, that is, the RAN updates the mapping relationship between the DRB and the first NCCF node to a mapping relationship between the DRB and the second NCCF node.

S710: The UE sends the uplink data packet to the RAN.

Correspondingly, the RAN receives the uplink data packet from the UE.

S711: The RAN sends the uplink data packet to the second NCCF node.

Correspondingly, the second NCCF node receives the uplink data packet from the RAN.

It may be understood that, if the RAN receives the uplink data packet from the UE after the RAN determines to switch from the third interface to the fourth interface to transmit the uplink data packet from the UE, the RAN sends the uplink data packet to the second NCCF node.

Optionally, after receiving the uplink data packet from the UE through the RAN, the second NCCF node may send a downlink data packet to the UE through the RAN, that is, the second NCCF node sends the downlink data packet to the RAN, so that the RAN sends, to the UE, the downlink data packet received from the second NCCF node.

In this embodiment of this application, the CMF may select the plurality of NCCF nodes for the session of the UE in advance, send the information about the RAN to each NCCF node in the plurality of NCCF nodes, and send the information about the plurality of NCCF nodes to the RAN. Further, if an NCCF node providing a service for the UE needs to be switched from the first NCCF node to the second NCCF node, the RAN and the second NCCF node may directly communicate with each other, thereby reducing a switching delay of the NCCF node.

The foregoing describes the methods in embodiments of this application in detail with reference to FIG. 3 to FIG. 7. The following describes apparatuses in embodiments of this application in detail with reference to FIG. 8 to FIG. 10. It should be noted that the apparatuses shown in FIG. 8 to FIG. 10 may implement the steps in the foregoing methods. For brevity, details are not described herein again.

FIG. 8 is a block diagram of a communication apparatus 1000 according to an embodiment of this application. As shown in FIG. 8, the communication apparatus 1000 may include a transceiver unit 1010 and a processing unit 1020.

In a possible design, the communication apparatus 1000 may be the access network device in the foregoing method embodiments, or may be a chip configured to implement a function of the access network device in the foregoing method embodiments.

It should be understood that the communication apparatus 1000 may correspond to the access network device in the method 300, the method 400, the method 500, the method 600, or the method 700 in embodiments of this application, and the communication apparatus 1000 may include units configured to perform the method 300 in FIG. 3, the method 400 in FIG. 4, the method 500 in FIG. 5, the method 600 in FIG. 6, or the method 700 in FIG. 7. In addition, the units in the communication apparatus 1000 and the foregoing other operations and/or functions are separately intended to implement corresponding procedures of the method 300 in FIG. 3, the method 400 in FIG. 4, the method 500 in FIG. 5, the method 600 in FIG. 6, or the method 700 in FIG. 7. It should be understood that a specific process in which the units perform the foregoing corresponding steps is described in detail in the foregoing method embodiments. For brevity, details are not described herein.

In another possible design, the communication apparatus 1000 may be the first device in the foregoing method embodiments, or may be a chip configured to implement a function of the first device in the foregoing method embodiments.

It should be understood that the communication apparatus 1000 may correspond to the method 300 in embodiments of this application, and the communication apparatus 1000 may include units configured to perform the method performed by the first device in the method 300 in FIG. 3. In addition, the units in the communication apparatus 1000 and the foregoing other operations and/or functions are separately intended to implement corresponding procedures of the method 300 in FIG. 3. It should be understood that a specific process in which the units perform the foregoing corresponding steps is described in detail in the foregoing method embodiments. For brevity, details are not described herein.

In another possible design, the communication apparatus 1000 may be the terminal device in the foregoing method embodiments, or may be a chip configured to implement a function of the terminal device in the foregoing method embodiments.

It should be understood that the communication apparatus 1000 may correspond to the method 400, the method 500, or the method 600 in embodiments of this application, and the communication apparatus 1000 may include units configured to perform the method performed by the terminal device in the method 400 in FIG. 4, the method 500 in FIG. 5, or the method 600 in FIG. 6. In addition, the units in the communication apparatus 1000 and the foregoing other operations and/or functions are separately intended to implement corresponding procedures of the method 400 in FIG. 4, the method 500 in FIG. 5, and the method 600 in FIG. 6. It should be understood that a specific process in which the units perform the foregoing corresponding steps is described in detail in the foregoing method embodiments. For brevity, details are not described herein.

In another possible design, the communication apparatus 1000 may be the source network computing converged function node in the foregoing method embodiments, or may be a chip configured to implement a function of the source network computing converged function node in the foregoing method embodiments.

It should be understood that the communication apparatus 1000 may correspond to the source network computing converged function node in the method 400, the method 500, or the method 600 in embodiments of this application, and the communication apparatus 1000 may include units configured to perform the method performed by the source network computing converged function node in the method 400 in FIG. 4, the method 500 in FIG. 5, or the method 600 in FIG. 6. In addition, the units in the communication apparatus 1000 and the foregoing other operations and/or functions are separately intended to implement corresponding procedures of the method 400 in FIG. 4, the method 500 in FIG. 5, and the method 600 in FIG. 6. It should be understood that a specific process in which the units perform the foregoing corresponding steps is described in detail in the foregoing method embodiments. For brevity, details are not described herein.

In another possible design, the communication apparatus 1000 may be the converged management function network element in the foregoing method embodiments, or may be a chip configured to implement a function of the converged management function network element in the foregoing method embodiments.

It should be understood that the communication apparatus 1000 may correspond to the converged management function network element in the method 700 in embodiments of this application, and the communication apparatus 1000 may include units configured to perform the method performed by the converged management function network element in the method 700 in FIG. 7. In addition, the units in the communication apparatus 1000 and the foregoing other operations and/or functions are separately intended to implement corresponding procedures of the method 700 in FIG. 7. It should be understood that a specific process in which the units perform the foregoing corresponding steps is described in detail in the foregoing method embodiments. For brevity, details are not described herein.

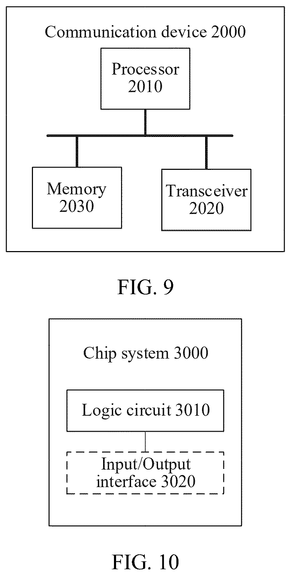

It should be further understood that the transceiver unit 1010 in the communication apparatus 1000 may correspond to a transceiver 2020 in a communication device 2000 shown in FIG. 9, and the processing unit 1020 in the communication apparatus 1000 may correspond to a processor 2010 in the communication device 2000 shown in FIG. 9.

It should be further understood that, when the communication apparatus 1000 is a chip, the chip includes a transceiver unit. Optionally, the chip may further include a processing unit. The transceiver unit may be an input/output circuit or a communication interface. The processing unit may be a processor, a microprocessor, or an integrated circuit integrated on the chip.

The transceiver unit 1010 is configured to implement signal receiving and sending operations of the communication apparatus 1000, and the processing unit 1020 is configured to implement a signal processing operation of the communication apparatus 1000.

Optionally, the communication apparatus further includes a storage unit 1030, and the storage unit 1030 is configured to store instructions.

FIG. 9 is a block diagram of the communication device 2000 according to an embodiment of this application. As shown in FIG. 9, the communication device 2000 includes at least one processor 2010 and the transceiver 2020. The processor 2010 is coupled to a memory, and is configured to execute instructions stored in the memory, to control the transceiver 2020 to send a signal and/or receive a signal. Optionally, the communication device 2000 further includes the memory 2030, configured to store the instructions.

It should be understood that the processor 2010 and the memory 2030 may be integrated into one processing apparatus. The processor 2010 is configured to execute program code stored in the memory 2030, to implement the foregoing functions. During specific implementation, the memory 2030 may alternatively be integrated into the processor 2010, or may be independent of the processor 2010.

It should be further understood that the transceiver 2020 may include a receiver (or referred to as a receiver) and a transmitter (or referred to as a transmitter). The transceiver 2020 may further include an antenna. There may be one or more antennas. The transceiver 2020 may alternatively be an antenna interface or an interface circuit.

When the communication device 2000 is a chip, the chip includes a transceiver unit and a processing unit. The transceiver unit may be an input/output circuit or a communication interface. The processing unit may be a processor, a microprocessor, or an integrated circuit integrated on the chip.

FIG. 10 is a diagram of a chip system according to an embodiment of this application. The chip system herein may alternatively be a system including a circuit. The chip system 3000 shown in FIG. 10 includes a logic circuit 3010 and an input/output interface (input/output interface) 3020. The logic circuit is configured to: be coupled to the input interface, and transmit data through the input/output interface, to perform the method in FIG. 3, FIG. 4, FIG. 5, FIG. 6, or FIG. 7.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps in the methods disclosed with reference to embodiments of this application may be performed and completed by a hardware processor, or may be performed and completed by a combination of hardware in the processor and a software module. A software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing method in combination with the hardware in the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

It may be understood that the memory in this embodiment of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the methods provided in embodiments of this application, this application further provides a computer program product. The computer program product includes computer program code. When the computer program code is run on a computer, the computer is enabled to perform the method in any one of the embodiments shown in FIG. 3, FIG. 4, FIG. 5, FIG. 6, and FIG. 7.

According to the methods provided in embodiments of this application, this application further provides a computer-readable storage medium. The computer-readable storage medium stores program code. When the program code is run on a computer, the computer is enabled to perform the method in any one of the embodiments shown in FIG. 3, FIG. 4, FIG. 5, FIG. 6, and FIG. 7.

According to the methods provided in embodiments of this application, this application further provides a system, including the foregoing access network device and first device. Optionally, the system further includes a converged management function network element and/or a target network computing converged function node.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer instructions are loaded and executed on the computer, the procedure or functions according to embodiments of this application are all or partially generated. The computer instructions may be stored in a computer-readable storage medium, or transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

In several embodiments mentioned in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A switching method, comprising:
receiving, by an access network device, first information from a first device;
determining, by the access network device based on the first information, to switch from a first interface to a second interface to transmit an uplink data packet from a terminal device, wherein the first interface is an interface between the access network device and a source network computing converged function node, the second interface is an interface between the access network device and a target network computing converged function node, and the first device is the terminal device or the source network computing converged function node; and
forwarding, by the access network device, the uplink data packet from the terminal device to the target network computing converged function node through the second interface.

2. The method according to claim 1, wherein the first information is first switching acknowledgment information, and before receiving, by the access network device, the first information from the first device, the method further comprises:
sending, by the access network device, first switching request information to the first device.

3. The method according to claim 2, wherein the first switching request information comprises identification information of a first data flow and/or information about the target network computing converged function node, and the first data flow is a data flow whose transmission is to be switched from the first interface to the second interface.

4. The method according to claim 3, wherein the first switching acknowledgment information comprises identification information of a second data flow, and the second data flow comprises the first data flow and a data flow associated with the first data flow, or the second data flow comprises a data flow associated with the first data flow, or the second data flow is a part or an entirety of the first data flow; and the second data flow is a data flow whose transmission is to be switched from the first interface to the second interface.

5. The method according to any one of claims 2 to 4, wherein the first switching acknowledgment information further comprises information about a timer, and determining, by the access network device based on the first information, to switch from the first interface to the second interface to transmit the uplink data packet from the terminal device comprises:
determining, by the access network device based on the information about the timer, to switch from the first interface to the second interface to transmit the uplink data packet from the terminal device after the timer expires.

6. The method according to any one of claims 2 to 4, wherein the first device is the terminal device, the first switching acknowledgment information further comprises a target packet sequence number, and determining, by the access network device based on the first information, to switch from the first interface to the second interface to transmit the uplink data packet from the terminal device comprises:
determining, by the access network device based on the target packet sequence number, to switch from the first interface to the second interface to transmit the uplink data packet from the terminal device after a target data packet is received, wherein the target data packet comprises the target packet sequence number; and
forwarding, by the access network device, the uplink data packet from the terminal device to the target network computing converged function node through the second interface comprises:
forwarding, by the access network device, the target data packet from the terminal device and at least one data packet after the target data packet to the target network computing converged function node through the second interface.

7. The method according to claim 1, wherein the first information is a switching indication packet, and forwarding, by the access network device, the uplink data packet from the terminal device to the target network computing converged function node through the second interface comprises:
forwarding, by the access network device, a data packet after the switching indication packet from the terminal device to the target network computing converged function node through the second interface.

8. The method according to claim 1, wherein the first device is the terminal device, the first information is packet indication information, the packet indication information indicates that a first data packet is an initial packet or a tail packet of a first task, the first task is a unit that belongs to an application or a service and that is configured to implement specific service logic, and the first data packet comprises the packet indication information;
receiving, by the access network device, the first information from the first device comprises:
receiving, by the access network device, the first data packet from the first device; and
determining, by the access network device based on the first information, to switch from the first interface to the second interface to transmit the uplink data packet from the terminal device comprises:
if the packet indication information indicates that the first data packet is the initial packet of the first task, determining, by the access network device, to switch from the first interface to the second interface to transmit the uplink data packet from the terminal device; and
forwarding, by the access network device, the uplink data packet from the terminal device to the target network computing converged node through the second interface comprises:
forwarding, by the access network device to the target network computing converged function node through the second interface, the first data packet and at least one data packet received from the terminal device after the first data packet;
or,
if the packet indication information indicates that the first data packet is the tail packet of the first task, after receiving a second data packet from the terminal device, determining, by the access network device, to switch from the first interface to the second interface to transmit the uplink data packet from the terminal device, wherein the second data packet is a data packet received by the access network device after the first data packet; and
forwarding, by the access network device, the uplink data packet from the terminal device to the target network computing converged node through the second interface comprises:
forwarding, by the access network device, the second data packet to the target network computing converged function node through the second interface.

9. The method according to claim 8, wherein the packet indication information is comprised at a service data adaptation protocol SDAP layer or a protocol data unit PDU layer of the first data packet.

10. The method according to claim 1, wherein the first device is the terminal device, the first information is switching indication information, and receiving, by the access network device, the first information from the first device comprises:
receiving, by the access network device, a third data packet from the first device, wherein the third data packet comprises the switching indication information; and
forwarding, by the access network device, the uplink data packet from the terminal device to the target network computing converged function node through the second interface comprises:
forwarding, by the access network device, the third data packet to the target network computing converged function node through the second interface.

11. The method according to claim 10, wherein the switching indication information is comprised at an SDAP layer or a PDU layer of the third data packet.

12. The method according to claim 1, wherein the first device is the terminal device, and the first information is second switching request information.

13. The method according to claim 12, wherein the second switching request information comprises identification information of a third data flow, and the third data flow is a data flow whose transmission is to be switched from the first interface to the second interface.

14. The method according to any one of claims 1 to 13, wherein the first device is the terminal device, and the method further comprises:
sending, by the access network device, a switching command to the source network computing converged function node, wherein the switching command comprises identification information of a fourth data flow and/or the information about the target network computing converged function node, and the fourth data flow is a data flow whose transmission is to be switched from the first interface to the second interface.

15. The method according to any one of claims 1 to 14, wherein the method further comprises:
determining, by the access network device, the target network computing converged function node.

16. The method according to claim 15, wherein determining, by the access network device, the target network computing converged function node comprises:
determining, by the access network device, the target network computing converged function node when a first condition is met, wherein the first condition comprises one or more of the following: a processing capability of the source network computing converged function node is lower than a processing capability threshold, or quality of communication between the source network computing converged function node and the terminal device is lower than a communication quality threshold.

17. The method according to any one of claims 1 to 14, wherein the method further comprises:
receiving, by the access network device, the information about the target network computing converged function node from a converged management function network element.

18. A switching method, comprising:
receiving, by a first device, first switching request information from an access network device, wherein the first device is a terminal device or a source network computing converged function node; and
sending, by the first device, first switching acknowledgment information to the access network device, wherein the first switching acknowledgment information is used by the access network device to determine to switch from a first interface to a second interface to transmit an uplink data packet from the terminal device, the first interface is an interface between the access network device and the source network computing converged function node, and the second interface is an interface between the access network device and a target network computing converged function node.

19. The method according to claim 18, wherein the first switching request information comprises identification information of a first data flow and/or information about the target network computing converged function node, and the first data flow is a data flow whose transmission is to be switched from the first interface to the second interface.

20. The method according to claim 19, wherein the first switching acknowledgment information comprises identification information of a second data flow, and the second data flow comprises the first data flow and a data flow associated with the first data flow, or the second data flow comprises a data flow associated with the first data flow, or the second data flow is a part or an entirety of the first data flow; and the second data flow is a data flow whose transmission is to be switched from the first interface to the second interface.

21. The method according to any one of claims 18 to 20, wherein the first switching acknowledgment information further comprises information about a timer, and the first switching acknowledgment information is used by the access network device to determine to switch from the first interface to the second interface to transmit the uplink data packet from the terminal device after the timer expires.

22. The method according to any one of claims 18 to 20, wherein the first device is the terminal device, the first switching acknowledgment information further comprises a target packet sequence number, the first switching acknowledgment information is used by the access network device to determine to switch from the first interface to the second interface to transmit the uplink data packet from the terminal device after a target data packet is received, and the target data packet comprises the target packet sequence number.

23. The method according to any one of claims 18 to 21, wherein the first device is the source network computing converged function node, and the method further comprises:
sending, by the first device, a context of a to-be-switched data flow to the target network computing converged function node, wherein the to-be-switched data flow is a data flow whose transmission is to be switched from the first interface to the second interface.

24. A switching method, comprising:
determining, by a terminal device, to switch a network computing converged function node; and
sending, by the terminal device, a third data packet to an access network device, wherein the third data packet comprises switching indication information, and the switching indication information is used by the access network device to determine to switch from a first interface to a second interface to transmit an uplink data packet from the terminal device; or
sending, by the terminal device, second switching request information to an access network device, wherein the second switching request information is used by the access network device to determine to switch from a first interface to a second interface to transmit an uplink data packet from the terminal device, the first interface is an interface between the access network device and a source network computing converged function node, and the second interface is an interface between the access network device and a target network computing converged function node.

25. The method according to claim 24, wherein determining, by the terminal device, to switch the network computing converged function node comprises:
determining, by the terminal device, to switch the network computing converged function node when a first condition is met, wherein the first condition comprises one or more of the following: a processing capability of the source network computing converged function node is lower than a processing capability threshold, or quality of communication between the source network computing converged function node and the terminal device is lower than a communication quality threshold.

26. The method according to claim 24 or 25, wherein the switching indication information or the second switching request information comprises information about the target network computing converged function node, and the method further comprises:
determining, by the terminal device, the target network computing converged function node.

27. The method according to any one of claims 24 to 26, wherein the switching indication information is comprised at a service data adaptation protocol layer or a protocol data unit layer of the third data packet.

28. A switching method, comprising:
sending, by a converged management function network element, second information to each of a plurality of network computing converged function nodes, wherein the second information comprises information about an access network device;
sending, by the converged management function network element, third information to the access network device, wherein the third information comprises information about the plurality of network computing converged function nodes, and the third information further indicates that a first network computing converged function node in the plurality of network computing converged function nodes is configured to provide a service for a terminal device; and
sending, by the converged management function network element, fourth information to the access network device, wherein the fourth information is used by the access network device to determine to switch from a third interface to a fourth interface to transmit an uplink data packet from the terminal device, the third interface is an interface between the access network device and the first network computing converged function node, and the fourth interface is an interface between the access network device and a second network computing converged function node in the plurality of network computing converged function nodes.

29. The method according to claim 28, wherein sending, by the converged management function network element, the fourth information to the access network device comprises:
sending, by the converged management function network element, the fourth information to the access network device when a first condition is met, wherein the first condition comprises one or more of the following: a processing capability of the first network computing converged function node is lower than a processing capability threshold, or quality of communication between the first network computing converged function node and the terminal device is lower than a communication quality threshold.

30. A switching method, comprising:
sending, by an access network device, first switching request information to a source network computing converged function node;
sending, by the source network computing converged function node, first switching acknowledgment information to the access network device; and
determining, by the access network device based on the first switching acknowledgment information, to switch from a first interface to a second interface to transmit an uplink data packet from a terminal device, wherein the first interface is an interface between the access network device and the source network computing converged function node, and the second interface is an interface between the access network device and a target network computing converged function node.

31. The method according to claim 30, wherein the first switching request information comprises identification information of a first data flow and/or information about the target network computing converged function node, and the first data flow is a data flow whose transmission is to be switched from the first interface to the second interface.

32. The method according to claim 30 or 31, wherein the first switching acknowledgment information comprises identification information of a second data flow, and the second data flow comprises the first data flow and a data flow associated with the first data flow, or the second data flow comprises a data flow associated with the first data flow, or the second data flow is a part or an entirety of the first data flow; and the second data flow is a data flow whose transmission is to be switched from the first interface to the second interface.

33. The method according to any one of claims 30 to 32, wherein the first switching acknowledgment information comprises information about a timer; and
determining, by the access network device based on the first switching acknowledgment information, to switch from the first interface to the second interface to transmit the uplink data packet from the terminal device comprises:
determining, by the access network device based on the information about the timer, to switch from the first interface to the second interface to transmit the uplink data packet from the terminal device after the timer expires.

34. The method according to any one of claims 30 to 33, wherein the method further comprises:
sending, by a converged management function network element, the information about the target network computing converged function node to the access network device.

35. The method according to any one of claims 30 to 34, wherein after determining, by the access network device, to switch from the first interface to the second interface to transmit the uplink data packet from the terminal device, the method further comprises:
sending, by the terminal device, the uplink data packet to the access network device; and
forwarding, by the access network device, the uplink data packet to the target network computing converged function node through the second interface.

36. A communication apparatus, comprising a module or a unit configured to implement the method according to any one of claims 1 to 17, the method according to any one of claims 18 to 23, the method according to any one of claims 24 to 27, or the method according to claim 28 or 29.

37. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 17, the method according to any one of claims 18 to 23, the method according to any one of claims 24 to 27, or the method according to claim 28 or 29.

38. The apparatus according to claim 36 or 37, wherein the apparatus is a communication device, a circuit, or a chip.

39. A chip, comprising a processor and a communication interface, wherein the communication interface is configured to: receive data and/or information, and transmit the received data and/or information to the processor, and the processor processes the data and/or information, to perform the method according to any one of claims 1 to 17, the method according to any one of claims 18 to 23, the method according to any one of claims 24 to 27, or the method according to claim 28 or 29.

40. A computer-readable storage medium, wherein the computer-readable storage medium stores a computer program, and when the computer program is executed, a computer is enabled to perform the method according to any one of claims 1 to 17, the method according to any one of claims 18 to 23, the method according to any one of claims 24 to 27, or the method according to claim 28 or 29.

41. A computer program product comprising instructions, wherein when the computer program product runs on a computer, the computer is enabled to perform the method according to any one of claims 1 to 17, the method according to any one of claims 18 to 23, the method according to any one of claims 24 to 27, or the method according to claim 28 or 29.

42. A communication system, comprising an access network device and a first device, wherein the access network device is configured to perform the method according to any one of claims 1 to 17, and the first device is configured to perform the method according to any one of claims 18 to 23.
